# EUROPÄISCHE PATENTSCHRIFT

(11) **EP 2 698 232 B1**
(45) Veröffentlichungstag und Bekanntmachung des Hinweises auf die Patenterteilung: **22.04.2015**
(21) Anmeldenummer: 13005361.4
(22) Anmeldetag: 19.08.2009
(51) Int. Cl.: B25J 5/02, B25J 9/00, B25J 9/04, B25J 19/00, B05B 13/04, B05B 15/12

(54) **Lackiereinrichtung**
Painting device
Dispositif de peinture

(30) Priorität: 03.09.2008 DE 102008045553
(43) Veröffentlichungstag der Anmeldung: 19.02.2014
(62) Teilanmeldung aus: 09777972.2
(73) Patentinhaber: Dürr Systems GmbH, 74321 Bietigheim-Bissingen (DE)
(72) Erfinder: Herre, Frank, 71739 Oberriexingen (DE); Haas, Jürgen, 75438 Knittlingen (DE); Hezel, Thomas, 71679 Asperg (DE); Leiensetter, Bernd, 74360 Ilsfeld (DE)
(74) Vertreter: Beier, Ralph

(56) Entgegenhaltungen:
- DE-A1-102004 056 493
- FR-A- 2 777 483
- FR-A- 2 804 349
- JP-A- S60 860

## Beschreibung

Die Erfindung betrifft eine Lackiereinrichtung zur Lackierung von Bauteilen, insbesondere zur Lackierung von Kraftfahrzeugkarosserien oder deren Teilen.

In modernen Lackieranlagen zur Lackierung von Kraftfahrzeugkarosserien werden mehrachsige Lackierroboter eingesetzt, die als Applikationsgerät beispielsweise einen Rotationszerstäuber aufweisen. Die Ansteuerung des Lackierroboters erfolgt hierbei durch eine Robotersteuerung, die meist außerhalb der Lackierkabine in einem Steuerschrank angeordnet ist und bei der Montage der Lackieranlage mit dem Lackierroboter verbunden wird. Darüber hinaus müssen bei der Montage des Lackierroboters auch die verschiedenen Versorgungsleitungen für die zum Betrieb des Lackierroboters erforderlichen Medien (z.B. Druckluft, Lacke, Spülmittel) angeschlossen werden. Diese herkömmlichen Lackieranlagen weisen verschiedene Nachteile auf, wie im Folgenden ausgeführt wird.

Zum Einen erfordert der Anschluss des Lackierroboters bei der Endmontage einen erheblichen personellen Aufwand, was die Montagekosten erhöht. Darüber hinaus ist auch eine bestimmte Montagezeit erforderlich, was bei einer Umrüstung einer bestehenden Lackieranlage eine entsprechende Umrüst- und Stillstandszeit der Lackieranlage bedingt, was zu Produktionsausfällen führen kann.

Zum Anderen können bei der Endmontage des Lackierroboters Fehler beim Anschluss an die Robotersteuerung oder beim Anschluss der Versorgungsleitungen auftreten, so dass der Lackierroboter nach der Endmontage einem aufwändigen Funktionstest unterzogen werden muss, wobei die Umrüstzeit und die entsprechende Stillstandszeit der Lackieranlage durch die zum Testen erforderliche Zeit verlängert wird.

Ferner ist zum Stand der Technik hinzuweisen auf DE 92 12 718 U1, DE 29 15 603 C2, DE 691 02 353 T2, DE 44 30 234 A1 und DE 696 29 246 T2.

Aus JP-A-60000860 ist ein Roboter bekannt, der eine Roboterbasis, einen proximalen Roboterarm und einen distalen Roboterarm aufweist, wobei an dem distalen Roboterarm Bauteile der Applikationstechnik angebracht sind. Aus dieser Druckschrift ist also eine Lackiereinrichtung gemäß dem Oberbegriff von Anspruch 1 bekannt. Nachteilig an dieser bekannten Lackiereinrichtung sind jedoch die relativ großen Farbwechselverluste.

Ferner ist zum Stand der Technik noch hinzuweisen auf FR-A-2 804 349.

Der Erfindung liegt deshalb die Aufgabe zugrunde, eine entsprechend verbesserte Lackiereinrichtung zu schaffen.

Diese Aufgabe wird durch eine erfindungsgemäße Lackiereinrichtung gemäß Anspruch 1 gelöst.

Die erfindungsgemäße Lackiereinrichtung weist einen mehrachsigen Lackierroboter auf, wobei derartige Lackierroboter an sich aus dem Stand der Technik beschrieben sind und deshalb nicht näher beschrieben werden müssen. Es ist deshalb lediglich kurz zu erwähnen, dass der erfindungsgemäße Lackierroboter einschließlich einer mehrachsigen Roboterhandachse vorzugsweise 5, 6, 7 oder 8 bewegliche Achsen aufweist. Der im Rahmen der Erfindung verwendete Begriff eines Lackierroboters ist also in dem bevorzugten Ausführungsbeispiel zu unterscheiden von herkömmlichen Dachmaschinen oder Seitenmaschinen, die ebenfalls zur Lackierung von Kraftfahrzeugkarosserien eingesetzt werden.

Der Lackierroboter führt als Applikationsgerät vorzugsweise einen Rotationszerstäuber, jedoch sind im Rahmen der Erfindung auch andere Zerstäubertypen möglich, wie beispielsweise Airmix-Geräte, Airless-Geräte, Luftzerstäuber oder Ultraschallzerstäuber.

Vorzugsweise eignet sich die Erfindung zur Applikation von Lacken, wie beispielsweise Nasslacken oder Pulverlacken. Hierbei können verschiedene Lacktypen appliziert werden, wie beispielsweise Grundierung ("Primer"), Basislack ("Base Coat") oder Klarlack ("Clear Coat"). Die Erfindung ist jedoch nicht auf die vorstehend exemplarisch erwähnten Beschichtungsmitteltypen beschränkt, sondern grundsätzlich auch mit anderen Typen von Beschichtungsmitteln realisierbar.

Darüber hinaus weist die erfindungsgemäße Lackiereinrichtung vorzugsweise in herkömmlicher Weise eine Robotersteuerung auf, die mit dem Lackierroboter verbunden ist und diesen entsprechend einem vorgegebenen Programm steuert.

Die Robotersteuerung ist hierbei in einem Steuerschrank untergebracht, was an sich aus dem Stand der Technik bekannt ist.

Die Erfindung sieht nun vorzugsweise vor, dass der Steuerschrank eine Tragsäule für den Lackierroboter bildet bzw. dass die Tragsäule für den Lackierroboter den Steuerschrank bildet und die Robotersteuerung beherbergt. Der Steuerschrank hat also im Rahmen der Erfindung eine Doppelfunktion, indem der Steuerschrank zum Einen die Robotersteuerung enthält und zum Anderen als mechanisches Tragelement für den Lackierroboter dient. Diese Doppelfunktion des Steuerschranks ermöglicht vorteilhaft eine Vormontage des Lackierroboters mit der Robotersteuerung und dem Steuerschrank, so dass das vormontierte Modul dann beim Kunden in der Lackieranlage einfach und schnell endmontiert werden kann. Im Rahmen der Erfindung ist der Steuerschrank deshalb gegenüber den herkömmlichen Steuerschränken modifiziert, um die mechanische Tragfunktion für den Lackierroboter erfüllen zu können.

In einem Ausführungsbeispiel der Erfindung wird der Lackierroboter ausschließlich von einem oder mehreren, jeweils als Tragsäule ausgebildeten Steuerschränken mechanisch getragen. Es ist jedoch alternativ auch möglich, dass der als Tragsäule ausgebildete Steuerschrank lediglich ein mechanisch stützendes Element neben weiteren Tragelementen ist, so dass der Steuerschrank lediglich zur mechanischen Abstützung des Lackierroboters beiträgt.

Darüber hinaus ist zu erwähnen, dass die Erfindung hinsichtlich der Form des Steuerschranks nicht auf eine bestimmte Form beschränkt ist, wie sie üblicherweise ein Schrank aufweist. Vielmehr kann der Steuerschrank auch andere Formen aufweisen, wie beispielsweise die Form einer Konsole oder eines Kastens.

Vorzugsweise ermöglicht die Erfindung eine Vormontage des Lackierroboters mit der Robotersteuerung und dem als Tragsäule ausgebildeten Steuerschrank. Bei einer derartigen modulartigen Vormontage weist der Steuerschrank vorzugsweise eine Schnittstelle auf, über die sämtliche fluidischen und elektrischen Versorgungsleitungen angeschlossen werden können, die zum Betrieb des Lackierroboters erforderlich sind. Dies ist vorteilhaft, weil dann nur eine einzige Schnittstelle angeschlossen werden muss, um den Betrieb des Lackierroboters zu ermöglichen, wodurch die Endmontagezeit verringert wird. Die zum Betrieb des Lackierroboters erforderlichen Versorgungsleitungen sind hierbei in dem vormontierten Modul vorzugsweise von der Schnittstelle des Steuerschranks bis zu dem Lackierroboter geführt, so dass innerhalb des vormontierten Moduls bei der Endmontage keine weiteren Montagearbeiten erforderlich sind.

Die Erfindung ist jedoch nicht auf die vorstehend beschriebene Variante beschränkt, in der der Lackierroboter zusammen mit der Robotersteuerung und dem als Tragsäule ausgebildeten Steuerschrank als vormontiertes Modul ausgeliefert wird. Vielmehr ist es im Rahmen der Erfindung auch möglich, dass der Lackierroboter getrennt von der Robotersteuerung und dem Steuerschrank ausgeliefert und dann erst beim Kunden endmontiert und mit der Robotersteuerung verbunden wird. Bei dieser Variante weist der Lackierroboter vorzugsweise eine Schnittstelle auf, über die der Lackierroboter trennbar mit dem als Tragsäule ausgebildeten Steuerschrank verbunden ist. Diese Schnittstelle zwischen dem Lackierroboter und dem Steuerschrank dient vorzugsweise auch zur mechanischen Verbindung zwischen dem Lackierroboter und dem als Tragsäule ausgebildeten Steuerschrank. Die Schnittstelle zwischen dem Lackierroboter und dem als Tragsäule ausgebildeten Steuerschrank enthält also vorzugsweise sämtliche fluidischen Versorgungsleitungen (z.B. Leitungen für Lack, Spülmittel und Druckluft) und elektrischen Versorgungsleitungen (z.B. Steuerleitungen und Sensorleitungen) zwischen dem Steuerschrank und dem Lackierroboter, die zum Betrieb des Lackierroboters erforderlich sind.

In den beiden vorstehend erwähnten Varianten (vormontiertes Modul und nicht-vormontiertes Modul) umfasst die jeweilige Schnittstelle vorzugsweise die pneumatische Leitung, die zur Druckluftversorgung des Lackierroboters erforderlich ist, beispielsweise, um eine Druckluftturbine eines Rotationszerstäubers anzutreiben. Weiterhin umfasst die Schnittstelle vorzugsweise mindestens eine Farbleitung zur Zuführung des zu applizierenden Lackes. Ferner umfasst die Erfindung vorzugsweise auch eine Spülmittelleitung, über die ein Spülmittel zugeführt werden kann, um den Lackierroboter und insbesondere den Rotationszerstäuber bei einem Farbwechsel zu spülen. Aus dem gleichen Grund umfasst die Schnittstelle vorzugsweise auch eine Rückführleitung zur Rückführung von Spülmittel und/oder Lack von dem Lackierroboter. Darüber hinaus enthält die Schnittstelle vorzugsweise auch elektrische Steuerleitungen zur Ansteuerung des Roboters durch die Robotersteuerung und/oder mindestens eine Sensorleitung zur Rückmeldung von Sensorgrößen von dem Lackierroboter zu der Robotersteuerung.

Es wurde bereits vorstehend erwähnt, dass es sich bei dem Lackierroboter um einen mehrachsigen Lackierroboter handelt, der beispielsweise einschließlich einer mehrachsigen Roboterhandachse 5, 6, 7 oder 8 bewegliche Achsen aufweist. Vorzugsweise umfasst der Lackierroboter eine ortsfest montierte oder verschiebbare Roboterbasis, ein drehbares Roboterteil, einen schwenkbaren proximalen Roboterarm ("Arm 1") und einen schwenkbaren distalen Roboterarm ("Arm 2").

In einem Ausführungsbeispiel der Erfindung ist das drehbare Roboterteil um eine im Wesentlichen senkrechte Drehachse relativ zu der Roboterbasis drehbar, wobei das drehbare Roboterteil vorzugsweise unter der Roboterbasis angeordnet ist. Die Erfindung ist hinsichtlich der Drehachse des drehbaren Roboterteils nicht auf eine exakt senkrecht ausgerichtete Drehachse beschränkt. Vielmehr kann die Drehachse auch leicht angewinkelt sein. Entscheidend ist lediglich in diesem Ausführungsbeispiel, dass die Drehachse des drehbaren Roboterteils im Wesentlichen aufrecht verläuft. Bei diesem Ausführungsbeispiel ist der proximale Roboterarm vorzugsweise um eine Schwenkachse schwenkbar, die im Wesentlichen waagerecht verläuft, was auch für den distalen Roboterarm gilt, der ebenfalls um eine vorzugsweise waagerechte Schwenkachse relativ zu dem proximalen Roboterarm schwenkbar ist.

In einem anderen Ausführungsbeispiel der Erfindung ist das drehbare Roboterteil dagegen um eine im Wesentlichen waagerechte Drehachse relativ zu der Roboterbasis drehbar. Bei diesem Ausführungsbeispiel verlaufen die Schwenkachsen des proximalen Roboterarms und des distalen Roboterarms dagegen vorzugsweise rechtwinklig zu der Drehachse des drehbaren Roboterteils, insbesondere rechtwinklig zur Förderrichtung der Bauteile in der Lackieranlage. Dieses Ausführungsbeispiel eignet sich beispielsweise zur Lackierung von Stoßfängern.

Bei den beiden vorstehend erwähnten Ausführungsbeispielen mit verschiedenen Drehachsen des drehbaren Roboterteils kann das drehbare Roboterteil wahlweise unter der Roboterbasis, über der Roboterbasis oder seitlich neben der Roboterbasis angeordnet sein. Es ist jedoch besonders vorteilhaft, wenn das drehbare Roboterteil unter der Roboterbasis angeordnet ist, da sich der Lackierroboter dann besonders gut für eine Innenlackierung von Kraftfahrzeugkarosserien eignet.

Weiterhin umfasst die Erfindung eine besondere Führung der zum Betrieb des Lackierroboters erforderlichen Versorgungsschläuche innerhalb des Lackierroboters. So müssen die zum Betrieb des Lackierroboters erforderlichen Medien (z.B. Druckluft, Lack und Spülmittel) in dem Lackierroboter von der Roboterbasis bis zu dem distalen Roboterarm und dann durch die Roboterhandachse bis zu dem Zerstäuber transportiert werden, wozu üblicherweise biegsame Versorgungsschläuche vorgesehen sind, die sich entsprechend der Roboterbewegung verformen. Vorzugsweise sind diese Versorgungsschläuche in den einzelnen Gelenken zwischen den aneinandergrenzenden Robotergliedern jeweils durch die sogenannte neutrale Faser geführt. Bei der neutralen Faser handelt es sich um eine gedachte Linie durch das Gelenk, die bei einer Gelenkdrehung nicht auf Zug oder Druck in Längsrichtung beansprucht wird, sondern nur einer Biegebelastung unterworfen ist. Die Verlegung der Versorgungsschläuche in der neutralen Faser der Gelenke bietet den Vorteil, dass die Versorgungsschläuche in axialer Richtung mechanisch nicht belastet werden.

Weiterhin ist vorzugsweise vorgesehen, dass die Versorgungsschläuche jeweils durch die Drehachse der Gelenke verlaufen, was die mechanische Belastung der Versorgungsschläuche ebenfalls verringert.

Darüber hinaus verlaufen die einzelnen Versorgungsschläuche in dem Lackierroboter von dem drehbaren Roboterteil bis zu dem distalen Roboterarm vorzugsweise jeweils in einer Schlauchebene, so dass die Versorgungsschläuche bei einem Verschwenken der Roboterarme nur in der Schlauchebene verbogen werden. Die Schlauchebene liegt also vorzugsweise rechtwinklig zur Drehachse der Roboterarme. Auch diese technische Maßnahme verringert die mechanische Belastung der Versorgungsschläuche bei einer Änderung der Roboterstellung und verlängert so die Lebensdauer der Versorgungsschläuche.

Darüber hinaus umfasst der erfindungsgemäße Lackierroboter Applikationstechnik, wie beispielsweise einen Farbwechsler zur Auswahl einer gewünschten Farbe, wobei der Farbwechsler eingangsseitig mit mehreren Farbzuleitungen und ausgangsseitig mit einem Zerstäuber verbunden ist. Darüber hinaus kann die in bzw. an dem Lackierroboter montierte Applikationstechnik eine Dosierpumpe oder anderer Dosiersysteme umfassen, wie beispielsweise einen Dosierzylinder, eine Taumelkolbenpumpe, Radialschrauben. Weiterhin kann die in bzw. an dem Lackierroboter montierte Applikationstechnik einen Motor zum Antrieb der Dosierpumpe oder der sonstigen Applikationstechnik umfassen. Ferner kann die an bzw. in dem Lackierroboter montierte Applikationstechnik einen Farbdruckregler zur Regelung des Applikationsdrucks umfassen und/oder einen Hochspannungsgenerator zur Erzeugung der für eine elektrostatische Lackierung erforderlichen Hochspannung.

Die Erfindung sieht vor, dass die Applikationstechnik auf die verschiedenen Roboterarme verteilt angeordnet ist. Hierbei befindet sich die Applikationstechnik für die selten verwendeten Lacke ("Low Runner") an oder in dem proximalen Roboterarm ("Arm 1"), während sich die Applikationstechnik für die häufig verwendeten Lacke an oder in dem distalen Roboterarm ("Arm 2") befindet, damit bei den häufig verwendeten Lacken ("High Runner") möglichst geringe Farbwechselverluste auftreten.

In dem bevorzugten Ausführungsbeispiel der Erfindung ist der distale Roboterarm über ein sogenanntes Ellbogengelenk schwenkbar mit dem proximalen Roboterarm verbunden, wobei das Ellbogengelenk in mindestens einer Roboterstellung nach unten gerichtet ist ("Ellbow down").

Hierbei ist die Roboterbasis vorzugsweise oberhalb der zu lackierenden Kraftfahrzeugkarosserien angeordnet, so dass sich der Zerstäuber unterhalb der Roboterbasis befindet. Diese erhöhte Anordnung des Lackierroboters ist unter Anderem deshalb vorteilhaft, weil überschüssige Beschichtungsmittelreste ("Overspray") durch den abwärts gerichteten Luftstrom in der Lackierkabine nach unten gedrückt werden und sich deshalb an dem erhöht angeordneten Lackierroboter in geringerem Maße ablagern. Die erhöhte Anordnung des Lackierroboters verringert also vorteilhaft die Verschmutzungsneigung des Lackierroboters.

Diese Roboterstellung ("Ellbow down") erleichtert die Innenlackierung von Kraftfahrzeugkarosserien, wenn der distale Roboterarm in einer Roboterstellung im Wesentlichen horizontal verläuft und in horizontaler Richtung in den Innenraum einer Kraftfahrzeugkarosserie einführbar ist, um den Innenraum zu lackieren.

In der Roboterstellung "Ellbow Down" kann der Aufbau auf dem distalen Roboterarm ("Arm 2") höher ausfallen als bei der Roboterstellung "Ellbow Up". Dies bedeutet, dass mehr Applikationstechnik in den distalen Roboterarm eingebaut werden kann, wodurch der Farb- und Lösemittelverbrauch verringert wird.

Darüber hinaus ermöglicht der erfindungsgemäße Lackierroboter vorzugsweise auch eine Roboterstellung, in der das Ellbogengelenk zwischen dem proximalen Roboterarm und dem distalen Roboterarm nach oben gerichtet ist ("Ellbow Up").

Ferner umfasst die erfindungsgemäße Lackiereinrichtung vorzugsweise einen Förderer, der die zu lackierenden Bauteile durch die Lackiereinrichtung fördert, was an sich aus dem Stand der Technik bekannt ist und deshalb nicht näher beschrieben werden muss. Die Roboterbasis ist hierbei vorzugsweise gegenüber dem Förderer nach oben versetzt, insbesondere in einer Höhe oberhalb der Oberseite der zu lackierenden Bauteile. Diese erhöhte Anordnung des Lackierroboters verringert - wie bereits vorstehend erwähnt - die Verschmutzungsanfälligkeit des Lackierroboters, da die lineare Durchströmung der Lackierkabine von oben nach unten die nicht an den Bauteilen anhaftenden Lackpartikel ("Overspray") nach unten drückt.

In einer Variante der Erfindung ist die Roboterbasis ortsfest montiert, so dass die Roboterbasis nicht beweglich ist. Hierzu kann die Roboterbasis direkt an dem die Tragsäule bildenden Steuerschrank befestigt werden.

Es besteht jedoch alternativ auch die Möglichkeit, dass die Roboterbasis mit dem Lackierroboter auf einer Verfahrschiene verfahrbar ist, was an sich aus dem Stand der Technik bekannt ist und deshalb nicht näher beschrieben werden muss. Bei der eingangs beschriebenen Vormontage eines Moduls mit dem Lackierroboter, der Robotersteuerung und dem als Tragsäule ausgebildeten Steuerschrank umfasst das vormontierte Modul vorzugsweise auch die Verfahrschiene.

In einem Ausführungsbeispiel der Erfindung weist die Lackiereinrichtung zusätzlich einen Handhabungsroboter auf, der Türen oder Hauben der zu lackierenden Kraftfahrzeugkarosserien öffnen und schließen kann, damit der eigentliche Lackierroboter eine Innenlackierung der Kraftfahrzeugkarosserien durchführen kann. Der Handhabungsroboter kann hierbei auf einer Verfahrschiene montiert sein, wobei die Verfahrschiene vorzugsweise ebenfalls an dem als Tragsäule ausgebildeten Steuerschrank montiert ist. Bei der eingangs erwähnten vormontierten Modulbauweise kann das vormontierte Modul also auch die Verfahrschiene für den Handhabungsroboter und/oder den Handhabungsroboter umfassen.

Die Verfahrschiene des Handhabungsroboters kann im Rahmen der Erfindung von dem als Tragsäule ausgebildeten Steuerschrank mechanisch getragen werden. Es besteht jedoch auch die Möglichkeit, dass die Verfahrschiene für den Handhabungsroboter zusätzlich von weiteren mechanischen Tragstrukturen getragen wird.

Darüber hinaus kann die Verfahrschiene für den Handhabungsroboter an derselben Tragsäule montiert werden, an der auch der Lackierroboter ortsfest montiert ist.

Ferner ist zu erwähnen, dass der Lackierroboter vorzugsweise oberhalb des Handhabungsroboters an der Tragsäule montiert ist, was den Betrieb erleichtert.

Darüber hinaus ist zu erwähnen, dass die Verfahrschiene für den Handhabungsroboter als sogenannte Stummelschiene ausgebildet sein kann. Dies bedeutet, dass die Verfahrschiene für den Handhabungsroboter kürzer ist als die Lackierkabine.

Weiterhin kann es vorteilhaft sein, wenn die Verfahrschiene für den Handhabungsroboter gegenüber dem Lackierroboter in Förderrichtung der Bauteile versetzt angeordnet ist. Dies ist insbesondere dann vorteilhaft, wenn die zu lackierenden Bauteile mit einer großen Fördergeschwindigkeit durch die Lackierkabine transportiert werden, da die Versetzung der Handhabungsschiene für den Handhabungsroboter in Förderrichtung dann mehr Zeit für den Handhabungsroboter ermöglicht.

Es wurde bereits vorstehend erwähnt, dass der Lackierroboter vorzugsweise in einer Lackierkabine angeordnet ist, wobei die Lackierkabine vorzugsweise glattflächige Kabinenwände ("Clean Wall") aufweist.

Darüber hinaus sind die Kabinenwände der Lackierkabine vorzugsweise mindestens teilweise durchsichtig oder weisen mindestens ein Sichtfenster auf, um eine Sichtkontrolle des Lackierbetriebs von außen zu ermöglichen.

Ferner ist in diesem Zusammenhang zu erwähnen, dass der als Tragsäule ausgebildete Steuerschrank vorzugsweise außerhalb der Lackierkabine angeordnet ist. Dies bietet den Vorteil, dass die Lackierkabine nicht betreten werden muss, um Wartungsarbeiten an der in dem Steuerschrank untergebrachten Robotersteuerung durchzuführen.

In einer Variante der Erfindung weist der Lackierroboter zusätzlich zu einem Zerstäuber einen Handhabungsgriff auf, um Türen oder Hauben der zu lackierenden Kraftfahrzeugkarosserien zu öffnen. Der Lackierroboter ist also in diesem Ausführungsbeispiel bifunktional, da der Lackierroboter wahlweise Lack applizieren oder als Handhabungsroboter dienen kann.

In einem weiteren Ausführungsbeispiel der Erfindung ist die den Steuerschrank bildende Tragsäule nicht ortsfest angeordnet, sondern verfahrbar. Beispielsweise kann die Tragsäule an einer oder mehreren Verfahrschienen verfahrbar sein, wobei die Verfahrschiene für die Tragsäule vorzugsweise parallel zur Förderrichtung der zu lackierenden Kraftfahrzeugkarosserien ausgerichtet ist. Vorzugsweise ist die Tragsäule vertikal ausgerichtet, wobei der Lackierroboter entlang der Tragsäule in vertikaler Richtung verfahrbar ist.

In einer Variante der Erfindung ist der Lackierroboter entlang einer Verfahrschiene verfahrbar, wobei die Verfahrschiene vorzugsweise in Förderrichtung der zu lackierenden Bauteile ausgerichtet ist, so dass die Verfahrschiene entlang der Lackierstraße verläuft. Der Lackierroboter ist hierbei durch einen im Wesentlichen vertikal ausgerichteten Träger mit der Verfahrschiene verbunden, wobei der Träger an seiner Oberseite von der Verfahrschiene geführt wird und entlang der Verfahrschiene verfahrbar ist, während der Träger an seiner Unterseite die Roboterbasis des Lackierroboters trägt. Der Träger sorgt also hierbei dafür, dass sich die Roboterbasis des Lackierroboters im unteren Bereich der Lackierkabine befindet, obwohl der Lackierroboter an der erhöht angeordneten Verfahrschiene verfahrbar ist. Der Träger zwischen der Verfahrschiene und dem Lackierroboter ermöglicht also eine Absenkung des Lackierroboter relativ zu der Verfahrschiene.

Weiterhin umfasst die Erfindung eine Variante, bei der in der Lackierkabine ein Förderer angeordnet ist, der die zu lackierenden Bauteile in einer vorgegebenen Förderrichtung durch die Lackiereinrichtung fördert, wobei derartige Förderer an sich zum Stand der Technik gehören und deshalb nicht näher beschrieben werden müssen. Der Lackierroboter ist hierbei ebenfalls an einer Verfahrschiene verfahrbar montiert, wobei eine Besonderheit darin besteht, dass die Verfahrschiene quer zu der Förderrichtung der zu lackierenden Bauteile ausgerichtet ist. Vorzugsweise verläuft die Verfahrschiene für den Lackierroboter in dieser Variante also rechtwinklig zu der Förderrichtung der zu lackierenden Bauteile, wodurch sich eine Lackierkabine mit einer sehr kurzen Kabinenlänge realisieren lässt.

Bei der Variante mit einer querstehenden Verfahrschiene für den Lackierroboter wird der Bewegungsspielraum für den Lackierroboter auf der Verfahrschiene in der Regel durch die seitliche Kabinenwand der Lackierkabine beschränkt. Zur Erweiterung des Bewegungsspielraums des Lackierroboters auf der querverlaufenden Verfahrschiene ist deshalb in einer Variante der Erfindung vorgesehen, dass die Kabinenwand in der Verlängerung der querverlaufenden Verfahrschiene seitliche Ausbuchtungen aufweist, so dass der Lackierroboter auf der Verfahrschiene in die Ausbuchtung der Lackierkabine hineingefahren werden kann. Bei dieser Variante der Erfindung ist die Kabinenbreite der Lackierkabine also über die Kabinenlänge nicht konstant, sondern variiert, wobei die Kabinenbreite seitlich neben der Verfahrschiene des Lackierroboters größer ist als in Förderrichtung vor und hinter der Verfahrschiene des Lackierroboters.

Ferner umfasst die Erfindung einen neuartigen Lackierroboter mit einer Roboterbasis, an der mindestens zwei Roboterarme oder sonstige Roboterglieder beweglich angelenkt sind. In einer Variante der Erfindung führen die beiden Roboterarme jeweils einen Zerstäuber. In einer anderen Variante der Erfindung ist dagegen vorgesehen, dass der eine Roboterarm einen Zerstäuber führt, während der andere Roboterarm ein Handhabungswerkzeug führt, insbesondere einen Greifer zum Öffnen oder Schließen einer Haube oder einer Tür einer Kraftfahrzeugkarosserie.

Darüber hinaus ermöglicht die Erfindung vorzugsweise noch die Endmontage des vormontierten und/oder getesteten Moduls an dem Montageort, wobei das Modul dann mechanisch verankert und an sämtliche Leitungen angeschlossen wird, die zum Betrieb des Lackierroboters und des zugehörigen Zerstäubers erforderlich sind. Weitere Testarbeiten sind dann jedoch in der Regel nicht erforderlich, wodurch die Endmontagezeit wesentlich herabgesetzt wird.

Es wurde bereits vorstehend erwähnt, dass sich der erfindungsgemäße Lackierroboter aufgrund seiner konstruktiven Gestaltung ("Ellbow down") gut zur Innenlackierung von Kraftfahrzeugkarosserien eignet. Die Erfindung ermöglicht deshalb auch die Innenlackierung von Kraftfahrzeugkarosserien, wobei der Lackierroboter so positioniert wird, dass das Ellbogengelenk zwischen dem proximalen Roboterarm und dem distalen Roboterarm nach unten gerichtet ist. Der distale Roboterarm mit dem Zerstäuber wird dann so positioniert, dass sich der distale Roboterarm seitlich neben der zu lackierenden Kraftfahrzeugkarosserie im Wesentlichen rechtwinklig zu der Förderrichtung der zu lackierenden Bauteile befindet. Der distale Roboterarm mit dem Zerstäuber ist dann im Wesentlichen horizontal ausgerichtet und wird in horizontaler Richtung in den Innenraum der zu lackierenden Kraftfahrzeugkarosserie eingeführt, um dort den Innenraum zu lackieren.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht einer Lackierkabine mit zwei ortsfest montierten Lackierrobotern,
- Figuren 2A-2F: verschiedene Perspektivansichten der Lackierroboter aus Figur 1,
- Figur 3: eine Perspektivansicht eines als Tragsäule ausgebildeten Steuerschranks aus der Lackierkabine gemäß Figur 1,
- Figur 4: eine Perspektivansicht einer Lackierkabine mit einem ortsfest montierten Lackierroboter und einem Türöffner, der an einer Stummelschiene unterhalb des Lackierroboters verfahrbar ist,
- Figur 5: eine Aufsicht auf die Lackierkabine aus Figur 4,
- Figur 6: eine Perspektivansicht der Lackierkabine aus den Figuren 4 und 5,
- Figur 7: eine Perspektivansicht einer Lackierkabine mit einer Verfahrschiene, an der zwei Lackierroboter verfahrbar sind, wobei auch zwei Handhabungsroboter an der Verfahrschiene verfahrbar sind,
- Figur 8: eine Frontansicht einer erfindungsgemäßen Lackierkabine mit verfahrbaren Lackierrobotern und ebenfalls verfahrbaren Handhabungsrobotern,
- Figur 9: eine Perspektivansicht einer Lackierkabine mit zwei Verfahrschienen für jeweils zwei Lackierroboter und zwei Handhabungsroboter,
- Figur 10: eine Perspektivansicht von zwei Lackierrobotern, die alternativ als Handhabungsroboter einsetzbar sind,
- Figur 11: eine Perspektivansicht einer Lackierkabine mit zwei ortsfest montierten Lackierrobotern,
- Figur 12: eine Perspektivansicht eines verfahrbaren Lackierroboters, wobei der Lackierroboter an einer verfahrbaren Tragsäule montiert ist, die den Steuerschrank bildet,
- Figur 13: eine Perspektivansicht einer erfindungsgemäßen Lackierkabine mit zwei rechtwinklig zur Förderrichtung der Kraftfahrzeugkarosserie verlaufenden Verfahrschienen für jeweils zwei Lackierroboter,
- Figur 14: eine Aufsicht auf die Lackierkabine aus Figur 13,
- Figur 15: eine Perspektivansicht der Lackierkabine aus den Figuren 13 und 14 parallel zur Förderrichtung der Kraftfahrzeugkarosserien,
- Figur 16: eine Perspektivansicht eines alternativen Ausführungsbeispiels einer erfindungsgemäßen Lackierkabine mit einer oben liegenden Verfahrschiene, wobei der Lackierroboter an der Verfahrschiene verfahrbar und gegenüber der Verfahrschiene heruntergesetzt ist,
- Figur 17: eine Perspektivansicht der Lackierkabine aus Figur 17 parallel zur Förderrichtung der Kraftfahrzeugkarosserien,
- Figur 18: ein erfindungsgemäßes Ausführungsbeispiel eines Lackierroboters mit einer Roboterbasis, an der mehrere Roboterarme beweglich angelenkt sind, sowie
- Figur 19: eine Perspektivansicht eines alternativen Ausführungsbeispiels eines Lackierroboters mit mehreren kinematisch parallel angeordneten Roboterarmen.

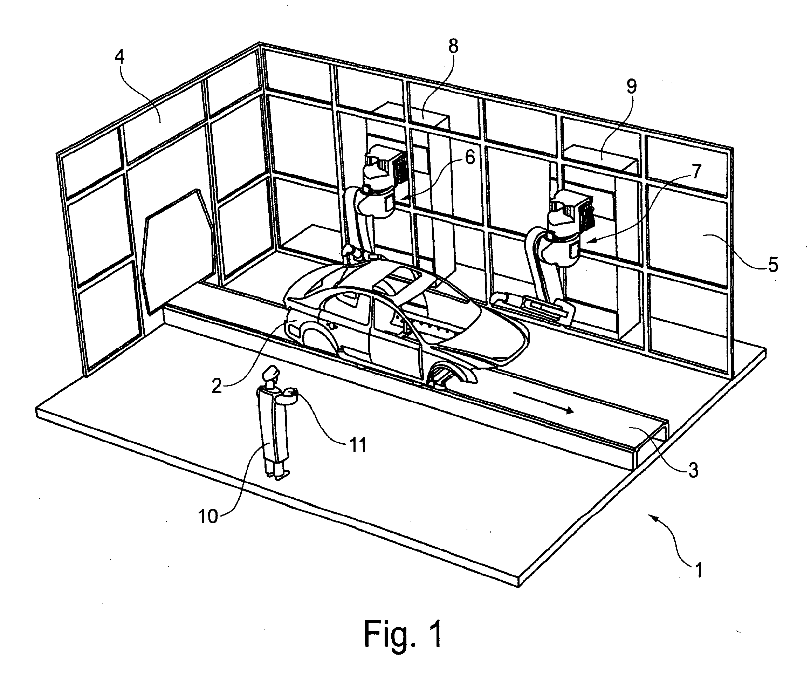

Die Perspektivansicht in Figur 1 zeigt eine erfindungsgemäße Lackierkabine 1, die in einer Lackieranlage zur Lackierung von Kraftfahrzeugkarosserien 2 angeordnet ist, wobei die Kraftfahrzeugkarosserien 2 von einer Fördereinrichtung 3 in Pfeilrichtung durch die Lackierkabine 1 transportiert werden.

In Förderrichtung vor und hinter der Lackierkabine 1 können weitere Lackierkabinen angeordnet sein, um andere Beschichtungsmittel auf die Kraftfahrzeugkarosserien 2 aufzutragen. Beispielsweise kann in der Lackierkabine 1 eine Basislackschicht auf die Kraftfahrzeugkarosserien 2 aufgetragen werden. In der vorangegangenen Lackierkabine (nicht dargestellt) wird dann zuvor eine Grundierung ("Primer") auf die Kraftfahrzeugkarosserien 2 aufgetragen. In einer in Förderrichtung folgenden Lackierkabine (nicht dargestellt) wird dann eine Klarlackschicht auf die Kraftfahrzeugkarosserien 2 aufgetragen.

Die Lackierkabine 1 weist über den gesamten Umfang umlaufend glattflächige Kabinenwände 4, 5 auf, wobei die Kabinenwände teilweise nicht dargestellt sind, um den Einblick in das Innere der Lackierkabine 1 zu ermöglichen. Vorteilhaft an den glattflächigen Kabinenwänden 4, 5 ist die geringe Verschmutzungsanfälligkeit und die gute Reinigungsfähigkeit.

Weiterhin ist zu erwähnen, dass die Kabinenwände 4, 5 weitgehend durchsichtig sind, was eine Sichtkontrolle des im Inneren der Lackierkabine 1 ablaufenden Lackierbetriebs durch eine außerhalb der Lackierkabine 1 befindliche Person ermöglicht.

In der Lackierkabine sind zwei mehrachsige Lackierroboter 6, 7 jeweils ortsfest an einem als Tragsäule ausgebildeten Steuerschrank 8, 9 montiert.

Die beiden Steuerschränke 8, 9 befinden sich hierbei außerhalb der Lackierkabine 1 und enthalten eine Robotersteuerung zur Ansteuerung der Lackierroboter 6, 7. Die Robotersteuerung in den Steuerschränken 8, 9 kann deshalb gewartet werden, ohne dass das Wartungspersonal die Lackierkabine 1 betreten muss.

Die Steuerschränke 8, 9 sind hierbei gegenüber herkömmlichen Steuerschränken mechanisch massiv verstärkt, um neben der Beherbergung der Robotersteuerung auch eine mechanische Tragfunktion für die Lackierroboter 6, 7 erfüllen zu können.

Die beiden Lackierroboter 6, 7 bilden hierbei zusammen mit den zugehörigen Steuerschränken 8, 9 und der darin befindlichen Robotersteuerung ein vormontiertes Modul, das von dem Hersteller der Lackierroboter vormontiert und getestet geliefert wird, so dass diese Module bei der Endmontage beim Kunden einfach aufgestellt werden können. Bei der Endmontage ist also nur noch eine mechanische Fixierung der Steuerschränke 8, 9 erforderlich sowie ein Anschluss der Steuerschränke 8, 9 an die zum Betrieb erforderlichen Leitungen (z.B. für Druckluft, Lacke, Spülmittel, Strom, etc.).

Die in den Steuerschränken 8, 9 befindlichen Robotersteuerungen können von einer außerhalb der Lackierkabine 1 befindlichen Bedienungsperson 10 mittels eines tragbaren Programmiergeräts 11 programmiert werden, wobei das Programmiergerät 11 eine drahtlose Datenübertragung von und zu den Robotersteuerungen ermöglicht.

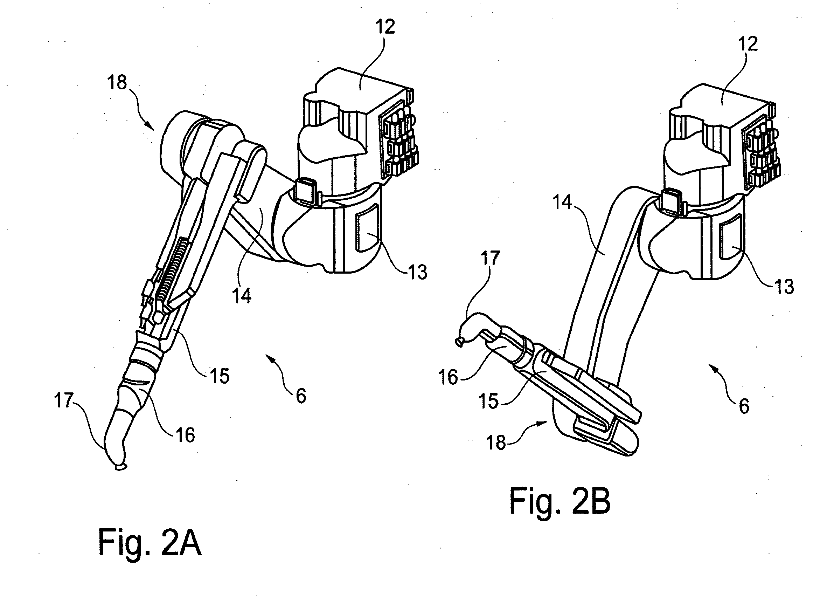

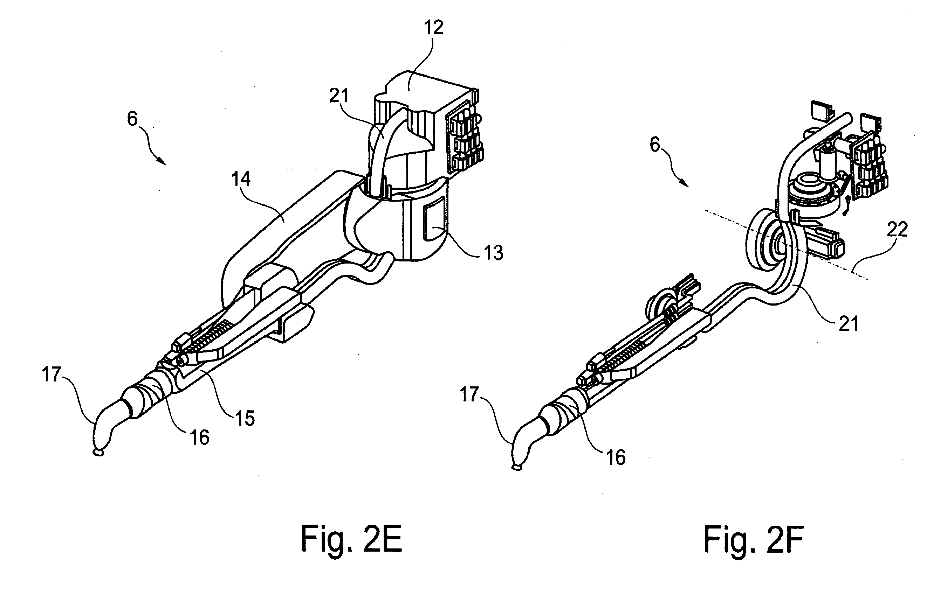

Die Figuren 2A bis 2F zeigen den Aufbau der Lackierroboter 6, 7.

So bestehen die Lackierroboter 6, 7 im Wesentlichen aus einer Roboterbasis 12, einem drehbaren Roboterteil 13, einem proximalen Roboterarm 14, einem distalen Roboterarm 15, einer Roboterhandachse 16 und einem Rotationszerstäuber 17.

Das drehbare Roboterteil 13 ist hierbei unterhalb der Roboterbasis 12 angeordnet und relativ zu der Roboterbasis 12 um eine senkrechte Drehachse drehbar.

Der proximale Roboterarm 14 ist dagegen relativ zu dem drehbaren Roboterteil 13 um eine horizontale Schwenkachse schwenkbar.

Das Gleiche gilt sinngemäß für den distalen Roboterarm 15, der um eine horizontal verlaufende Schwenkachse relativ zu dem proximalen Roboterarm 14 schwenkbar ist.

Weiterhin ist zu erwähnen, dass der proximale Roboterarm 14 durch ein Ellbogengelenk 18 mit dem distalen Roboterarm 15 verbunden ist. In der in Figur 2A dargestellten Roboterstellung ist das Ellbogengelenk 18 nach oben gerichtet ("Ellbow up"). In der in Figur 2B dargestellten Roboterstellung ist das Ellbogengelenk 18 dagegen nach unten gerichtet ("Ellbow down"). Die in Figur 2B dargestellte Roboterstellung mit dem nach unten gerichteten Ellbogengelenk 18 eignet sich besonders gut zur Innenlackierung der Kraftfahrzeugkarosserien 2, da der distale Roboterarm 15 dann in einfacher Weise seitlich in die zu lackierende Kraftfahrzeugkarosserie 2 eingeführt werden kann.

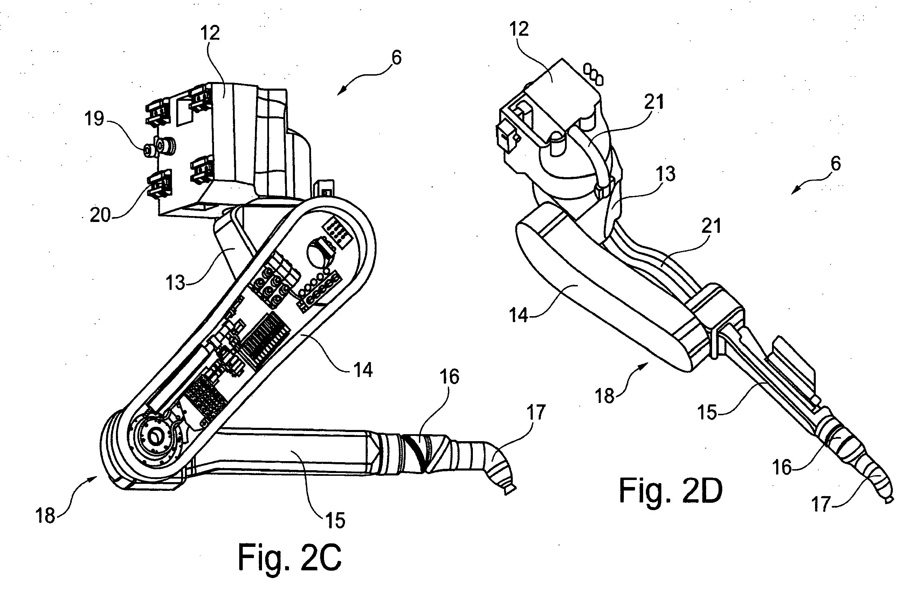

Aus Figur 2C ist weiterhin ersichtlich, dass die Roboterbasis 12 eine Schnittstelle 19 aufweist, um die zum Betrieb des Lackierroboters 6 erforderlichen Versorgungsleitungen anzuschließen. Darüber hinaus umfasst die Roboterbasis 12 auch eine mechanische Schnittstelle 20 zur Befestigung des Lackierroboters 6 an dem Steuerschrank 8.

Weiterhin ist aus Figur 2C ersichtlich, dass in dem proximalen Roboterarm 14 Applikationstechnik montiert ist, wie beispielsweise ein Dosierer, ein Farbwechsler oder eine Hochspannungskaskade.

Aus der Perspektivansicht in Figur 2D ist ferner ersichtlich, dass auch an dem distalen Roboterarm 15 Applikationstechnik installiert ist, so dass die zum Betrieb des Lackierroboters 6 erforderliche Applikationstechnik auf die beiden Roboterarme 14 und 15 verteilt ist.

Die Figuren 2D bis 2F zeigen weiterhin, dass zwischen der Roboterbasis 12 und dem Rotationszerstäuber 17 biegsame Versorgungsschläuche 21 verlaufen, die beispielsweise den zu applizierenden Lack zuführen.

Zum Einen ist hierbei zu erwähnen, dass die Versorgungsschläuche 21 zwischen dem drehbaren Roboterteil und dem distalen Roboterarm 15 jeweils in einer Schlauchebene verlaufen, die rechtwinklig zur Schwenkachse der Roboterarme 14, 15 ausgerichtet ist. Dies bedeutet, dass die Versorgungsschläuche 21 bei einem Schwenken der Roboterarme 14, 15 nur auf Biegung in der Schlauchebene beansprucht werden, d.h. nur in einer Richtung.

Zum anderen ist zu erwähnen, dass der proximale Roboterarm 14 um eine Schwenkachse 22 relativ zu dem drehbaren Roboterteil 13 schwenkbar ist, wobei die Versorgungsschläuche 21 in dem Gelenk zwischen dem proximalen Roboterarm 14 und dem drehbaren Roboterteil 13 durch die Schwenkachse 22 geführt sind. Dies bietet den Vorteil, dass die Versorgungsschläuche 21 bei einer Schwenkbewegung des proximalen Roboterarms 14 nur relativ geringfügigen mechanischen Belastungen unterworfen sind.

Aus dem gleichen Grund sind die Versorgungsschläuche 21 in den Gelenken jeweils in der sogenannten neutralen Faser geführt, in der lediglich Biegebelastungen der Versorgungsschläuche 21 auftreten, aber keine axialen Zug- oder Druckkräfte.

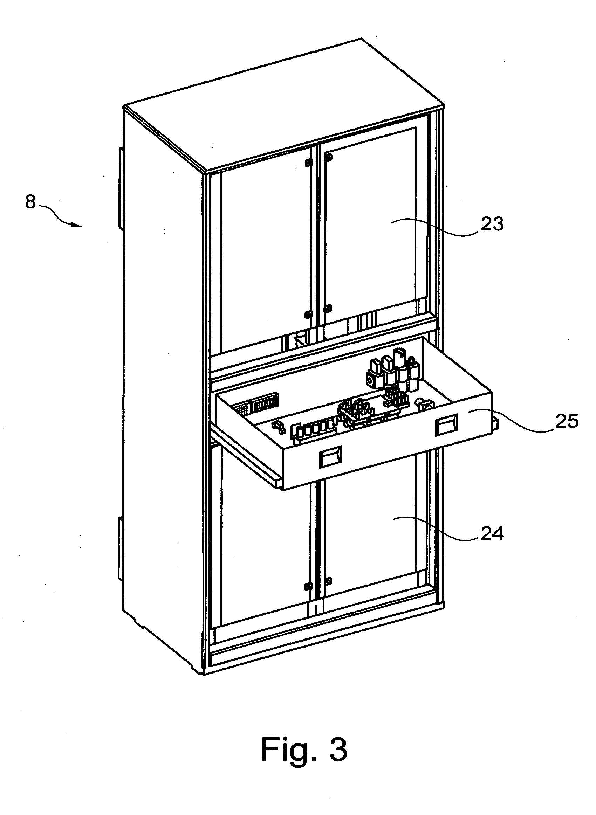

Figur 3 zeigt eine Perspektivansicht des Steuerschranks 8, wobei der in Figur 1 dargestellte Steuerschrank 9 baugleich ist.

Der Steuerschrank 8 weist im oberen Bereich und im unteren Bereich jeweils Platz für eine Robotersteuerung 23, 24 auf.

Darüber hinaus weist der Steuerschrank 8 in der Mitte eine Schublade 25 auf, in der beispielsweise Ersatzteile, Betriebsanleitungen oder auch herrenlose Putzlappen untergebracht werden können.

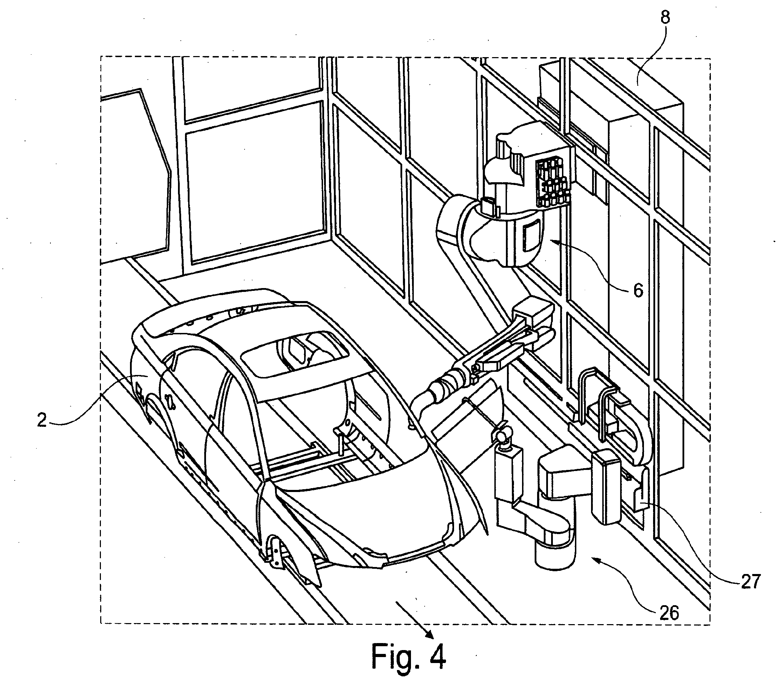

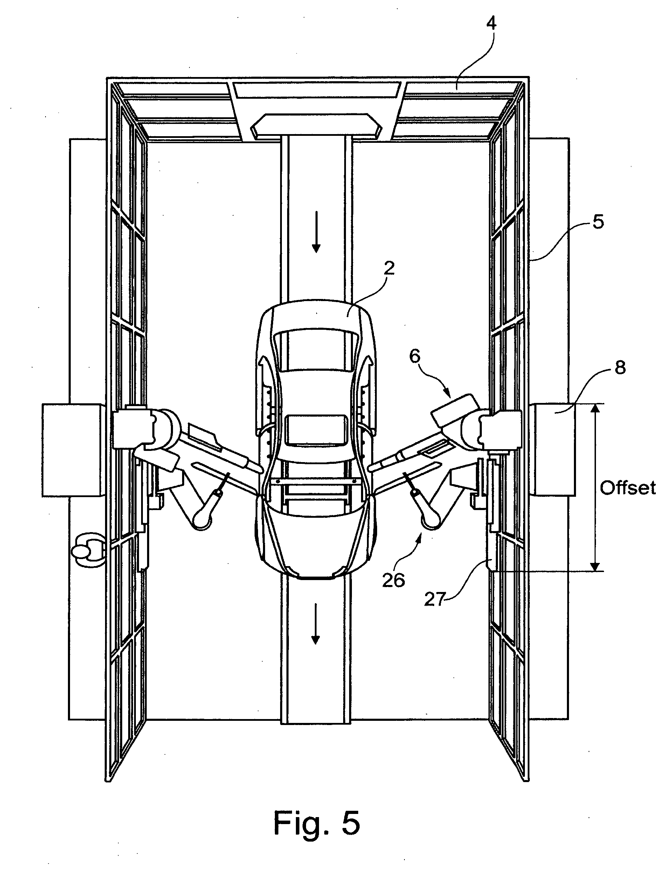

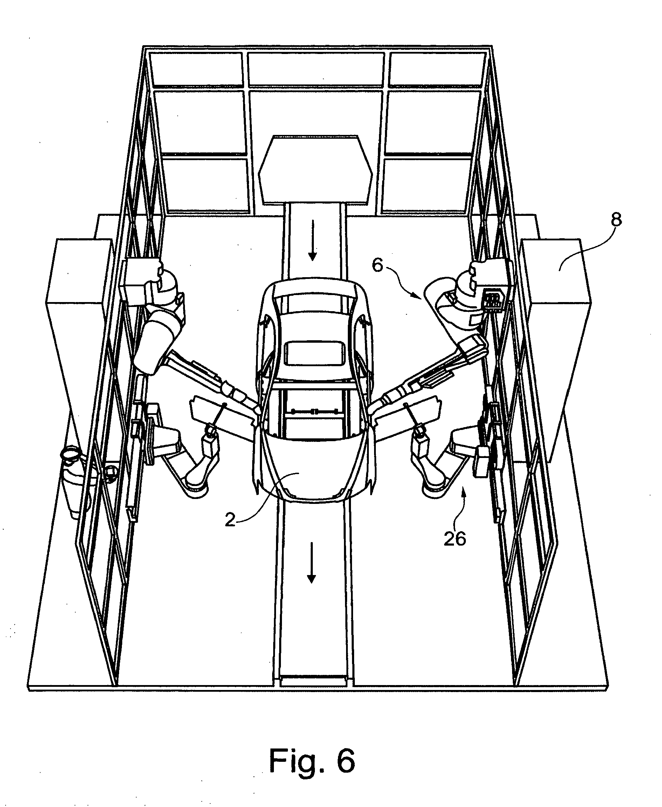

Die Figuren 4 bis 6 zeigen ein alternatives Ausführungsbeispiel einer erfindungsgemäßen Lackierkabine 1, die weitgehend mit der vorstehend beschriebenen Lackierkabine 1 übereinstimmt, so dass zur Vermeidung von Wiederholungen auf die vorstehende Beschreibung Bezug genommen wird, wobei für entsprechende Einzelheiten im Folgenden dieselben Bezugszeichen verwendet werden.

Eine Besonderheit dieses Ausführungsbeispiels besteht darin, dass zusätzlich zu dem Lackierroboter 6 ein Handhabungsroboter 26 vorgesehen ist, der die Aufgabe hat, die Türen der Kraftfahrzeugkarosserien 2 für eine anschließende Innenlackierung durch den Lackierroboter 6 zu öffnen.

Der Handhabungsroboter 26 ist unterhalb des Lackierroboters 6 an einer Stummelschiene 27 montiert und in Pfeilrichtung verfahrbar.

Die Stummelschiene 27 des Handhabungsroboters 26 ist hierbei gegenüber dem Lackierroboter 6 in Förderrichtung versetzt angeordnet. Dies ist vorteilhaft, damit der Handhabungsroboter 26 nach dem Abschluss der Innenlackierung durch den Lackierroboter 6 noch genügend Zeit hat, um die Tür der Kraftfahrzeugkarosserie 2 zu schließen, bevor die Kraftfahrzeugkarosserie 2 die Reichweite des Handhabungsroboters 26 in Pfeilrichtung verlässt.

Der Vollständigkeit halber ist darauf hinzuweisen, dass die vorstehend erwähnten Lackiereinrichtungen in der Lackierkabine auf beiden Seiten der Kraftfahrzeugkarosserie 2 symmetrisch angeordnet sind.

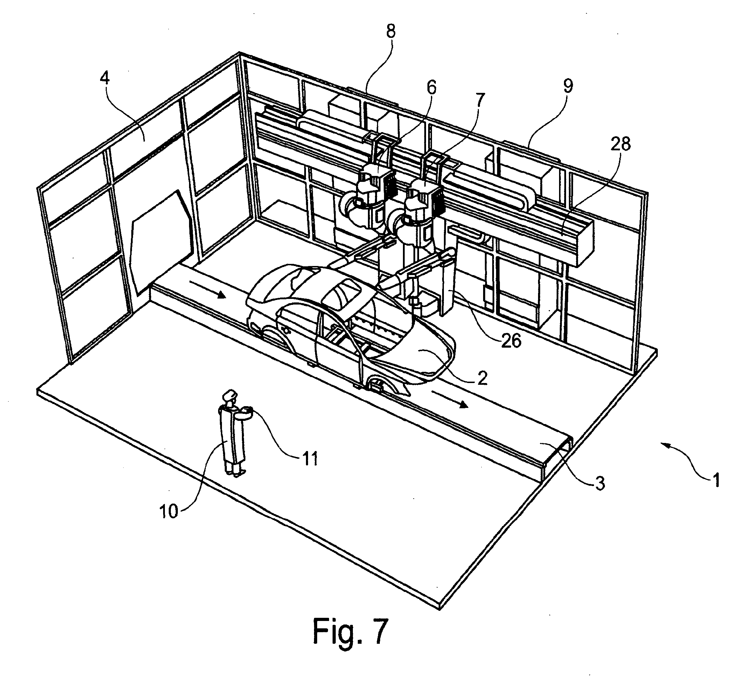

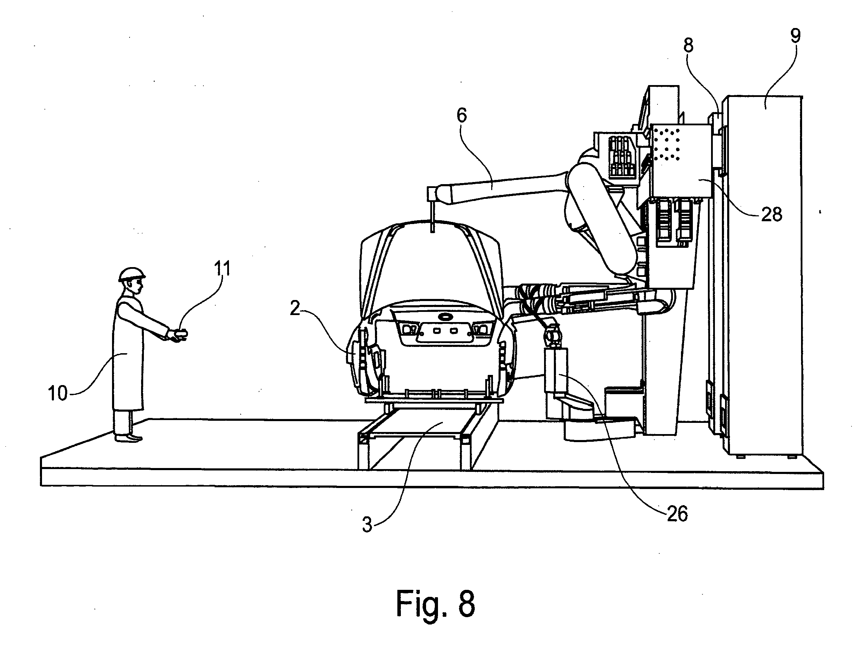

Die Figuren 7 und 8 zeigen ein weiteres Ausführungsbeispiel einer erfindungsgemäßen Lackierkabine 1, die weitgehend mit den vorstehend beschriebenen Ausführungsbeispielen übereinstimmt, so dass zur Vermeidung von Wiederholungen auf die vorstehende Beschreibung Bezug genommen wird, wobei für die entsprechenden Einzelheiten im Folgenden dieselben Bezugszeichen verwendet werden.

Eine Besonderheit dieses Ausführungsbeispiels besteht darin, dass die Lackierroboter 6, 7 in diesem Ausführungsbeispiel nicht ortsfest montiert sind, sondern an einer gemeinsamen Verfahrschiene 28.

Darüber hinaus sind auch die Handhabungsroboter 26 in diesem Ausführungsbeispiel an der Verfahrschiene 28 aufgehängt.

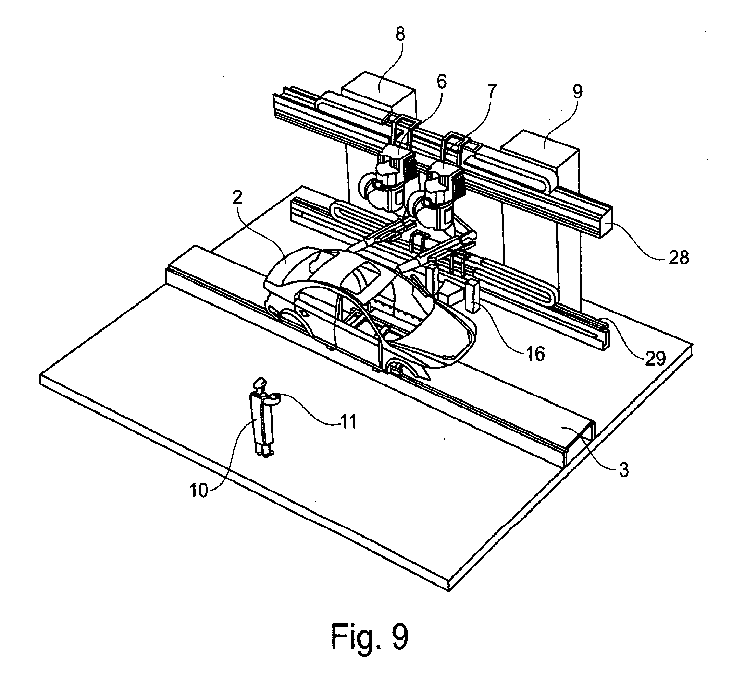

Figur 9 zeigt ein weiteres Ausführungsbeispiel einer erfindungsgemäßen Lackierkabine 1, das weitgehend mit dem vorstehend beschriebenen Ausführungsbeispiel übereinstimmt, so dass zur Vermeidung von Wiederholungen auf die vorstehende Beschreibung Bezug genommen wird, wobei für entsprechende Einzelheiten im Folgenden dieselben Bezugszeichen verwendet werden.

Eine Besonderheit dieses Ausführungsbeispiels besteht darin, dass an den als Tragsäule ausgebildeten Steuerschränken 8, 9 im unteren Bereich eine weitere Verfahrschiene 29 montiert ist. Die Verfahrschiene 29 trägt hierbei die Handhabungsroboter 26, wohingegen die obere Verfahrschiene 28 die Lackierroboter 6, 7 trägt.

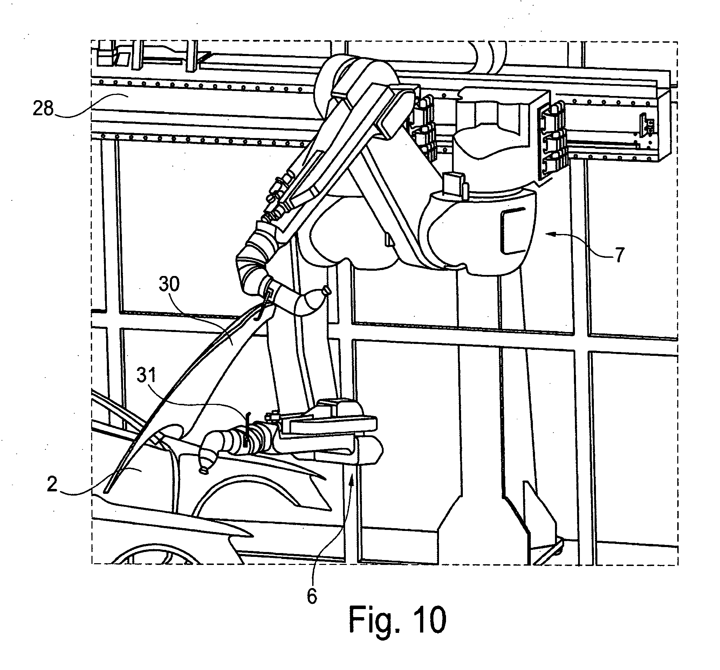

Figur 10 zeigt eine Perspektivansicht eines abgewandelten Lackierroboters 6, der zusätzlich zu dem Rotationszerstäuber 17 einen Handhabungsgriff 30 trägt, mit dem der Lackierroboter 6 Hauben 31 der Kraftfahrzeugkarosserien 2 öffnen bzw. schließen kann. Der Lackierroboter 6 ist also in diesem Ausführungsbeispiel bifunktional und kann wahlweise Lack applizieren oder als Handhabungsroboter dienen.

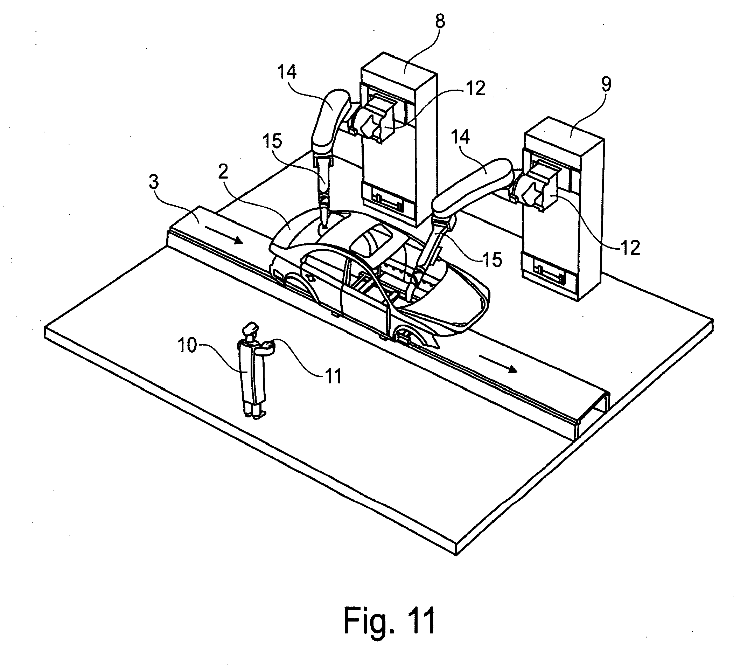

Schließlich zeigt Figur 11 ein Ausführungsbeispiel einer erfindungsgemäßen Lackierkabine 1, die weitgehend mit dem eingangs beschriebenen bevorzugten Ausführungsbeispiel übereinstimmt, so dass zur Vermeidung von Wiederholungen auf die vorstehende Beschreibung verwiesen wird, wobei für entsprechende Einzelheiten im Folgenden dieselben Bezugszeichen verwendet werden.

Eine Besonderheit dieses Ausführungsbeispiels besteht darin, dass die Drehachse zwischen der Roboterbasis 12 und dem drehbaren Roboterteil 13 waagerecht ausgerichtet ist und parallel zur Transportrichtung der Fördereinrichtung 3 verläuft.

Die Schwenkachsen des proximalen Roboterarms 14 und des distalen Roboterarms verlaufen dagegen hierbei in einer Ebene, die rechtwinklig zu der Transportrichtung der Fördereinrichtung 3 ausgerichtet ist.

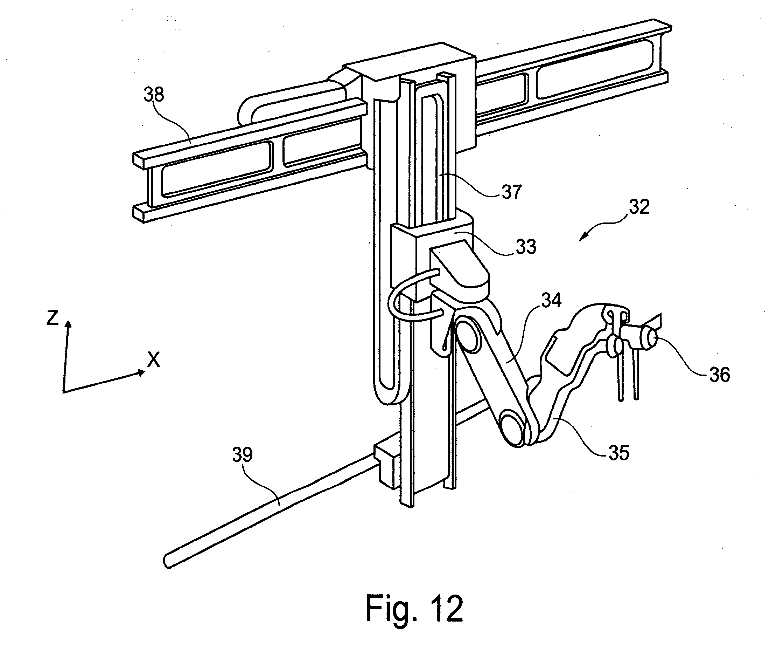

Figur 12 zeigt ein weiteres Ausführungsbeispiel einer erfindungsgemäßen Lackiereinrichtung mit einem verfahrbaren Lackierroboter 32, wobei der Lackierroboter 32 eine Roboterbasis 33, einen proximalen Roboterarm 34, einen distalen Roboterarm 35 und einen Zerstäuber 36 aufweist, der an dem distalen Roboterarm 35 geführt wird.

Der Lackierroboter 32 ist an einer Tragsäule 37 in vertikaler Richtung (Z-Richtung) verfahrbar. Eine Besonderheit besteht hierbei darin, dass die Tragsäule 37 nicht nur zur mechanischen Führung des Lackierroboters 32 dient, sondern auch eine Robotersteuerung und/oder Applikationstechnik für den Lackierroboter 32 enthält, wobei die Pneumatik für den Lackierroboter 32 in die Tragsäule 37 integriert sein kann. Die Tragsäule 37 bildet also in diesem Ausführungsbeispiel einen Steuerschrank für den Lackierroboter.

Die Tragsäule 37 ist an zwei übereinander liegenden, parallelen Verfahrschienen 38, 39 in X-Richtung verfahrbar, d.h. in Förderrichtung der zu lackierenden Kraftfahrzeugkarosserien.

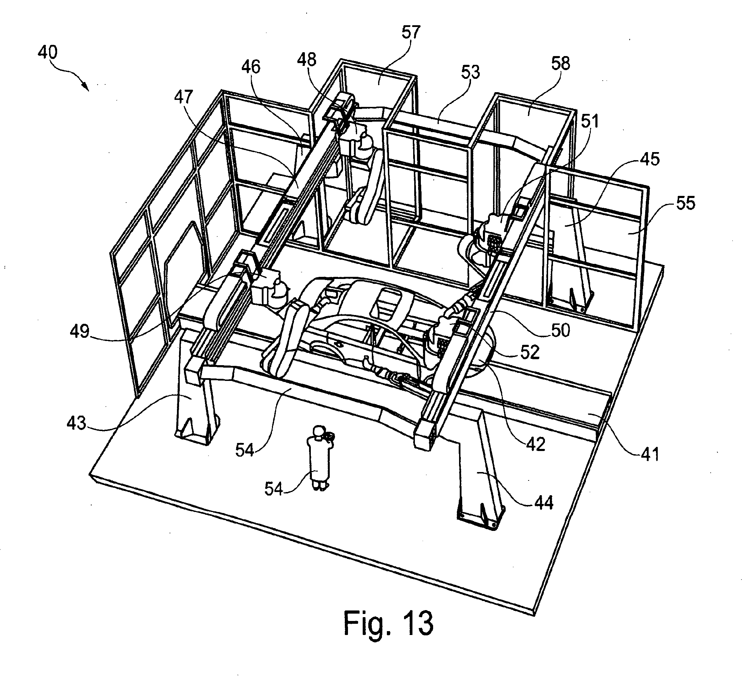

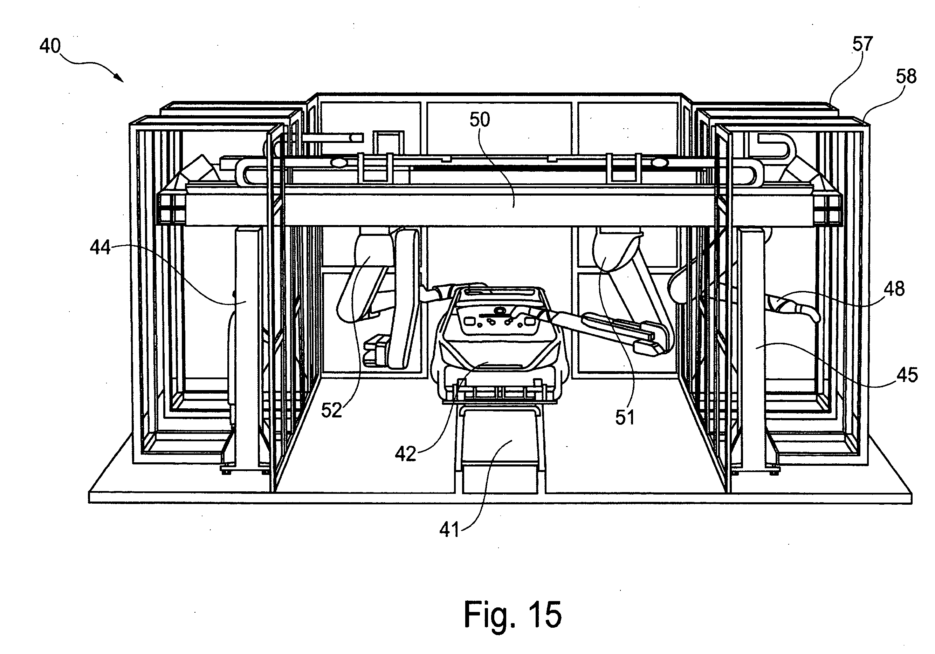

Die Figuren 13 und 15 zeigen ein weiteres Ausführungsbeispiel einer erfindungsgemäßen Lackierkabine 40, die in einer Lackieranlage angeordnet sein kann, wobei sich in Förderrichtung vor und hinter der Lackierkabine 40 weitere Lackierstationen befinden.

Durch die Lackierkabine 40 verläuft hierbei ein Förderer 41 entlang dem Kraftfahrzeugkarosserien 42 linear durch die Lackierkabine 40 transportiert werden, was an sich aus dem Stand der Technik bekannt ist und deshalb nicht näher beschrieben werden muss.

Außerhalb der Lackierkabine befinden sich hierbei vier Tragsäulen 43, 44, 45, 46, wobei die eingangsseitig angeordneten Tragsäulen 43, 46 eine eingangsseitig angeordnete Verfahrschiene 47 tragen, die rechtwinklig zur Förderrichtung des Förderers 41 ausgerichtet ist. Entlang der Verfahrschiene 47 sind zwei Lackierroboter 48, 49 rechtwinklig zur Förderrichtung des Förderers 41 verfahrbar.

Die beiden ausgangsseitig angeordneten Tragsäulen 44, 45 tragen an ihrer Oberseite gemeinsam eine weitere Verfahrschiene 50, die ebenfalls rechtwinklig zu Förderrichtung des Förderers 41 ausgerichtet ist. An der Verfahrschiene 50 sind ebenfalls zwei Lackierroboter 51, 52 verfahrbar angeordnet.

Die Lackierroboter 48, 49 und 51, 52 weisen hierbei jeweils eine sogenannte inverse Kinematik auf. Dies bedeutet, dass die Roboterbasis der Lackierroboter 48, 49, 51, 52 gegenüber herkömmlichen Lackierrobotern umgedreht ist, so dass sich die Roboterarme der Lackierroboter 48, 49, 51, 52 unterhalb der jeweiligen Roboterbasis befindet.

Die beiden Verfahrschienen 47, 50 sind jeweils an ihren Enden durch eine Längsstrebe 53, 54 miteinander verbunden, so dass die beiden Verfahrschienen 47, 50 zusammen mit den Längsstreben 53, 54 einen stabilen Rahmen bilden.

Die Lackierkabine 40 wird seitlich und an ihren Stirnseiten durch eine umlaufende Kabinenwand 55 begrenzt, wobei die Kabinenwand 55 durchsichtig ist, so dass eine außerhalb der Lackierkabine 40 befindliche Bedienungsperson 56 von außen eine Sichtkontrolle des innerhalb der Lackierkabine 40 stattfindenden Lackierprozesses durchführen kann.

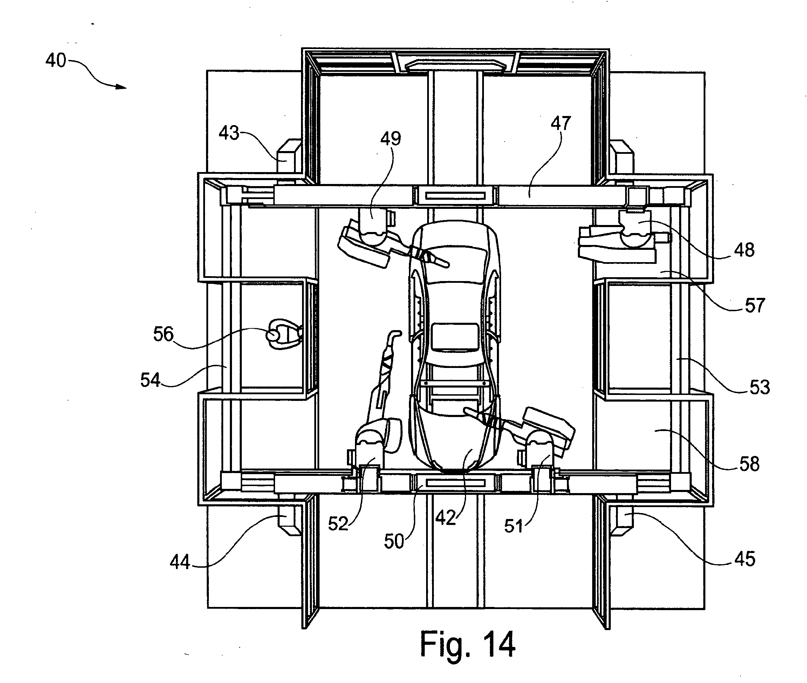

Weiterhin ist zu erwähnen, dass die Kabinenwand 55 seitlich in der Verlängerung der beiden Verfahrschienen 47, 50 jeweils eine seitliche Ausbuchtung 57, 58 aufweist, so dass die Lackierroboter 48, 49 bzw. 51, 52 auf den Verfahrschienen 47, 50 in seitlicher Richtung bis in die Ausbuchtungen 57, 58 hineingefahren werden können, wodurch der Bewegungsspielraum der Lackierroboter 48, 49, 51, 52 in seitlicher Richtung erweitert wird. Zwischen den seitlichen Ausbuchtungen 57, 58 ist die Kabinenbreite der Lackierkabine 40 dagegen geringer als im Bereich der Ausbuchtungen 57, 58, so dass die Bedienungsperson 56 den im Inneren der Lackierkabine ablaufenden Lackierprozess aus geringer Entfernung beobachten kann, wie insbesondere aus Figur 14 ersichtlich ist.

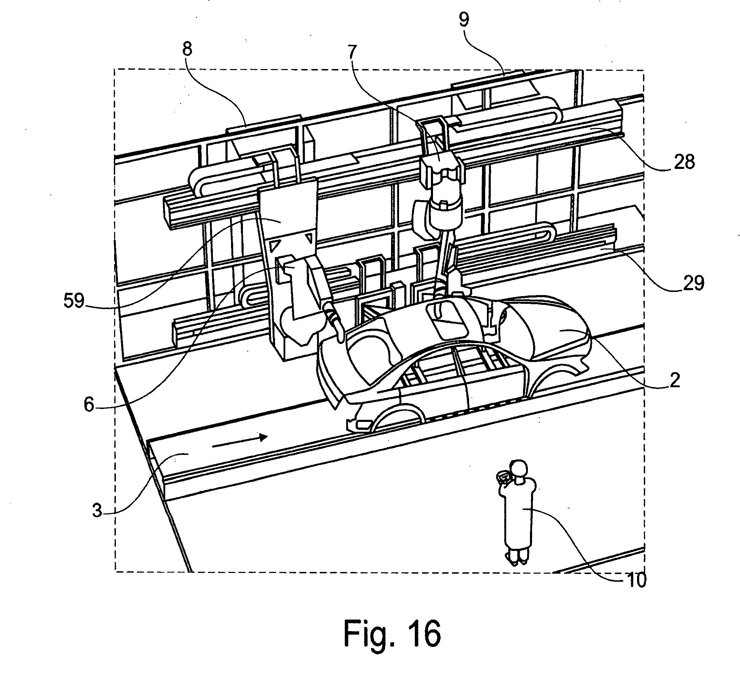

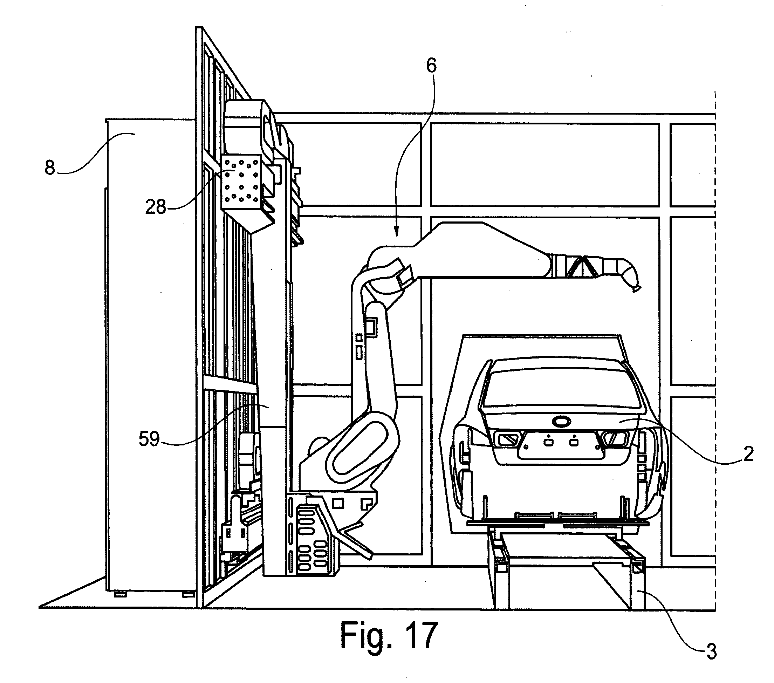

Das Ausführungsbeispiel gemäß den Figuren 16 und 17 stimmt weitgehend mit dem Ausführungsbeispiel gemäß Figur 9 überein, so dass zur Vermeidung von Wiederholungen auf die vorstehende Beschreibung verwiesen wird, wobei für entsprechende Einzelheiten im Folgenden die selben Bezugszeichen verwendet werden.

Eine Besonderheit dieses Ausführungsbeispiels besteht darin, dass der Lackierroboter 6 gegenüber der Verfahrschiene 28 nach unten versetzt angeordnet ist, obwohl der Lackierroboter 6 auf der oberen Verfahrschiene 28 verfahrbar ist. Hierzu dient ein im Wesentlichen vertikal ausgerichteter Träger 59, der an seiner Oberseite an der Verfahrschiene 28 verfahrbar ist, während der Träger 59 an seiner Unterseite die Roboterbasis des Lackierroboters 6 trägt. Der Träger 59 dient also dazu, den Lackierroboter 6 gegenüber der oberen Verfahrschiene 28 herunterzusetzen.

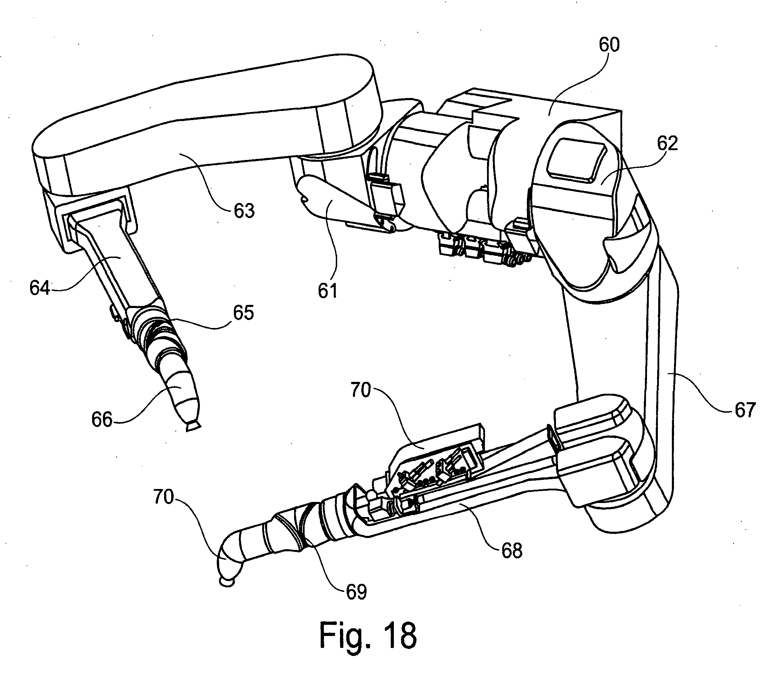

Figur 18 zeigt eine Perspektivansicht eines Lackierroboters mit einer Roboterbasis 60, die entweder ortsfest angeordnet oder an einer Verfahrschiene verfahrbar ist.

An der Roboterbasis 60 sind auf gegenüberliegenden Seiten zwei Roboterteile 61, 62 drehbar gelagert, wobei die beiden Roboterteile 61, 62 relativ zu der gemeinsamen Roboterbasis 60 um eine gemeinsame, horizontal verlaufende Drehachse drehbar sind.

An dem drehbaren Roboterteil 61 sind ein proximaler Roboterarm 63 und ein distaler Roboterarm 64 schwenkbar angeordnet, wobei der distale Roboterarm 64 über eine Roboterhandachse 65 einen Rotationszerstäuber 66 führt.

In gleicher Weise sind an dem drehbaren Roboterteil 62 ein proximaler Roboterarm 67 und ein distaler Roboterarm 68 schwenkbar angeordnet, wobei der distale Roboterarm 68 über eine Roboterhandachse 69 ebenfalls einen Rotationszerstäuber 70 führt.

Weiterhin ist zu erwähnen, dass auf dem distalen Roboterarm 68 Applikationstechnik 70 angeordnet ist, was in gleicher Weise auch für den geschlossen dargestellten distalen Roboterarm 64 gilt.

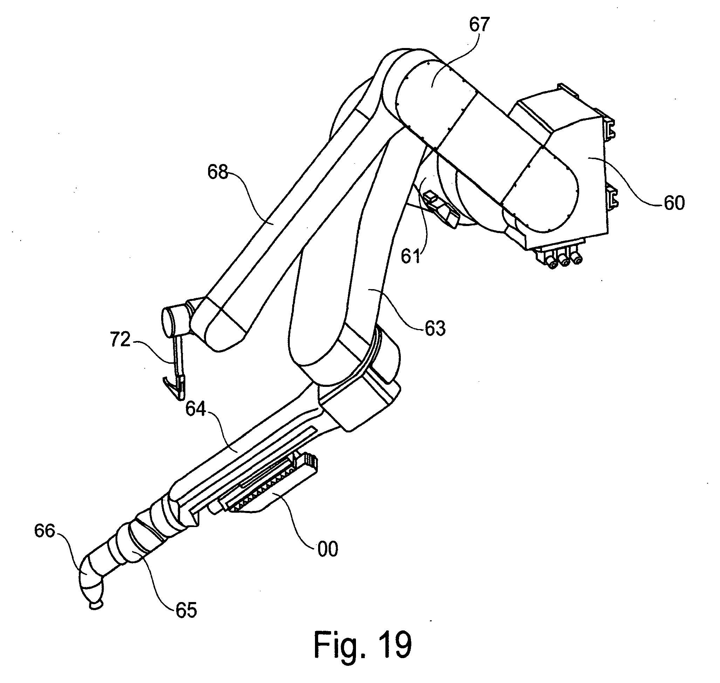

Figur 19 zeigt eine Abwandlung des Lackierroboters aus Figur 18, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der distale Roboterarm 68 keinen Rotationszerstäuber führt, sondern einen Griff 72 zum Öffnen bzw. Schließen einer Haube einer Kraftfahrzeugkarosserie. Der Lackierroboter ermöglicht also in diesem Ausführungsbeispiel nicht nur die Applikation von Lack, sondern dient auch als Handhabungsroboter und konkret als Haubenöffner.

Weiterhin ist zu diesem Ausführungsbeispiel zu erwähnen, dass der proximale Roboterarm 67 ohne Zwischenschaltung des Roboterteils 62 direkt an der Roboterbasis 60 schwenkbar angelenkt ist.

### Bezugszeichenliste:

| | | | |
|---|---|---|---|
| 1 | Lackierkabine | 34 | Proximaler Roboterarm |
| 2 | Kraftfahrzeugkarosserien | 35 | Distaler Roboterarm |
| 3 | Fördereinrichtung | 36 | Zerstäuber |
| 4 | Kabinenwand | 37 | Tragsäule |
| 5 | Kabinenwand | 38 | Verfahrschiene |
| 6 | Lackierroboter | 39 | Verfahrschiene |
| 7 | Lackierroboter | 40 | Lackierkabine |
| 8 | Steuerschrank | 41 | Förderer |
| 9 | Steuerschrank | 42 | Kraftfahrzeugkarosserien |
| 10 | Bedienungsperson | 43 | Tragsäule |
| 11 | Programmiergerät | 44 | Tragsäule |
| 12 | Roboterbasis | 45 | Tragsäule |
| 13 | Drehbares Roboterteil | 46 | Tragsäule |
| 14 | Proximaler Roboterarm | 47 | Verfahrschiene |
| 15 | Distaler Roboterarm | 48 | Lackierroboter |
| 16 | Roboterhandachse | 49 | Lackierroboter |
| 17 | Rotationszerstäuber | 50 | Verfahrschiene |
| 18 | Ellbogengelenk | 51 | Lackierroboter |
| 19 | Schnittstelle | 52 | Lackierroboter |
| 20 | Schnittstelle | 53 | Längsstrebe |
| 21 | Versorgungsschläuche | 54 | Längsstrebe |
| 22 | Schwenkachse | 55 | Kabinenwand |
| 23 | Robotersteuerung | 56 | Bedienungsperson |
| 24 | Robotersteuerung | 57 | Ausbuchtung |
| 25 | Schublade | 58 | Ausbuchtung |
| 26 | Handhabungsroboter | 59 | Träger |
| 27 | Stummelschiene | 60 | Roboterbasis |
| 28 | Verfahrschiene | 61 | Roboterteil |
| 29 | Verfahrschiene | 62 | Roboterteil |
| 30 | Handhabungsgriff | 63 | Proximaler Roboterarm |
| 31 | Hauben | 64 | Distaler Roboterarm |
| 32 | Lackierroboter | 65 | Roboterhandachse |
| 33 | Roboterbasis | 66 | Rotationszerstäuber |
| 67 | Proximaler Roboterarm | | |
| 68 | Distaler Roboterarm | | |
| 69 | Roboterhandachse | | |
| 70 | Rotationszerstäuber | | |
| 71 | Applikationstechnik | | |
| 72 | Griff | | |

## Patentansprüche

1. Lackiereinrichtung (1) zur Lackierung von Bauteilen (2), insbesondere zur Lackierung von Kraftfahrzeugkarosserien oder deren Teilen, mit
a) einem mehrachsigen Lackierroboter (6, 7), der einen Zerstäuber positioniert, und
b) Applikationstechnik mit Bauteilen für häufig verwendete Beschichtungsmittel und Bauteilen für selten verwendete Beschichtungsmittel,
c) wobei die Bauteile der Applikationstechnik für die häufig verwendeten Beschichtungsmittel an oder in einem distalen Roboterarm des Lackierroboters (6, 7) montiert sind,
**dadurch gekennzeichnet,**
d) **dass** die Bauteile der Applikationstechnik für die selten verwendeten Beschichtungsmittel an oder in einem proximalen Roboterarm des Lackierroboters (6, 7) montiert sind.

2. Lackiereinrichtung (1) nach Anspruch 1,
**gekennzeichnet durch**
a) eine Robotersteuerung (23, 24) zur Steuerung des Lackierroboters (6, 7), und
b) einen Steuerschrank (8, 9), der die Robotersteuerung (23, 24) enthält, wobei der Steuerschrank (8, 9) eine Tragsäule bildet, die den Lackierroboter (6, 7) mechanisch abstützt.

3. Lackiereinrichtung (1) nach Anspruch 2,
**dadurch gekennzeichnet,**
a) **dass** die Lackiereinrichtung (1) mit dem Lackierroboter (6, 7) und dem Steuerschrank (8, 9) ein vormontiertes Modul bildet,
b) **dass** der Steuerschrank (8, 9) eine Schnittstelle aufweist, über die sämtliche fluidischen und elektrischen Versorgungsleitungen angeschlossen werden können, die zum Betrieb des Lackierroboters (6, 7) erforderlich sind,
c) **dass** die Versorgungsleitungen in dem vormontierten Modul von der Schnittstelle des Steuerschranks zu dem Lackierroboter (6, 7) geführt sind.

4. Lackiereinrichtung (1) nach einem der vorhergehenden Ansprüche, **dadurch gekennzeichnet,**
a) **dass** der Lackierroboter (6, 7) durch eine Schnittstelle (19, 20) trennbar mit dem Steuerschrank (8, 9) verbunden ist,
b) **dass** der Lackierroboter (6, 7) durch die Schnittstelle (19, 20) mechanisch an der Tragsäule befestigt ist, und
c) **dass** die Schnittstelle (19, 20) sämtliche fluidischen und elektrischen Versorgungsleitungen zwischen dem Steuerschrank (8, 9) und dem Lackierroboter (6, 7) enthält, die zum Betrieb des Lackierroboters (6, 7) erforderlich sind.

5. Lackierroboter (6, 7) nach Anspruch 3 oder 4, **dadurch gekennzeichnet, dass** die Schnittstelle folgende Versorgungsleitungen (21) umfasst:
a) mindestens eine pneumatische Leitung zur Druckluftversorgung des Lackierroboters (6, 7), und/oder
b) mindestens eine Farbleitung zur Versorgung des Lackierroboters (6, 7) mit dem zu applizierenden Lack, und/oder
c) eine Spülmittelleitung zur Zuführung eines Spülmittels zu dem Lackierroboter (6, 7), und/oder
d) eine Rückführleitung zur Rückführung von Spülmittel und/oder Lack von dem Lackierroboter (6, 7), und/oder
e) elektrische Steuerleitungen zur Ansteuerung des Roboters durch die Robotersteuerung (23, 24), und/oder
f) mindestens eine Sensorleitung zur Rückmeldung von Sensorgrößen von dem Lackierroboter (6, 7) zu der Robotersteuerung (23, 24).

6. Lackiereinrichtung (1) nach einem der vorhergehenden Ansprüche, **dadurch gekennzeichnet,**
a) **dass** der Lackierroboter (6, 7) eine Roboterbasis (12), ein drehbares Roboterteil (13), den schwenkbaren proximalen Roboterarm (14) und den schwenkbaren distalen Roboterarm (15) aufweist,
b) **dass** das drehbare Roboterteil (13) um eine im Wesentlichen senkrechte Drehachse relativ zu der Roboterbasis (12) drehbar ist,
c) **dass** der proximale Roboterarm (14) relativ zu dem drehbaren Roboterteil (13) schwenkbar ist, insbesondere um eine im Wesentlichen waagerechte Schwenkachse,
d) **dass** der distale Roboterarm (15) relativ zu dem proximalen Roboterarm (14) schwenkbar ist, insbesondere um eine im Wesentlichen waagerechte Schwenkachse.

7. Lackiereinrichtung (1) nach einem der Ansprüche 1 bis 5, **dadurch gekennzeichnet,**
a) **dass** der Lackierroboter (6, 7) eine Roboterbasis (12), ein drehbares Roboterteil (13), den schwenkbaren proximalen Roboterarm (14) und den schwenkbaren distalen Roboterarm (15) aufweist,
b) **dass** das drehbare Roboterteil (13) um eine im Wesentlichen waagerechte Drehachse relativ zu der Roboterbasis (12) drehbar ist,
c) **dass** der proximale Roboterarm (14) relativ zu dem drehbaren Roboterteil (13) schwenkbar ist, insbesondere um eine Schwenkachse, die rechtwinklig zu der Drehachse des drehbaren Roboterteils (13) verläuft, insbesondere rechtwinklig zur Förderrichtung der Bauteile (2),
d) **dass** der distale Roboterarm (15) relativ zu dem proximalen Roboterarm (14) schwenkbar ist, insbesondere um eine Schwenkachse, die rechtwinklig zu der Drehachse des drehbaren Roboterteils (13) verläuft, insbesondere rechtwinklig zur Förderrichtung der Bauteile (2).

8. Lackiereinrichtung (1) nach Anspruch 6 oder 7,
**dadurch gekennzeichnet,**
a) **dass** das drehbare Roboterteil (13) unter der Roboterbasis (12) angeordnet ist, oder
b) **dass** das drehbare Roboterteil (13) seitlich neben der Roboterbasis (12) angeordnet ist, oder
c) **dass** das drehbare Roboterteil (13) über der Roboterbasis (12) angeordnet ist.

9. Lackiereinrichtung (1) nach einem der Ansprüche 6 bis 8, **dadurch gekennzeichnet,**
a) **dass** zur Zuführung der zum Betrieb des Lackierroboters (6, 7) erforderlichen Medien, insbesondere Druckluft, Lack und Spülmittel, mehrere biegsame Versorgungsschläuche (21) vorgesehen sind,
b) **dass** zwischen dem drehbaren Roboterteil (13) und dem proximalen Roboterarm (14) und/oder zwischen dem proximalen Roboterarm (14) und dem distalen Roboterarm (15) ein drehbares Gelenk angeordnet ist,
c) **dass** die Versorgungsschläuche (21) auf einer neutralen Faser durch das Gelenk hindurch geführt sind, so dass die Versorgungsschläuche (21) bei einer Gelenkdrehung nicht auf Zug oder Druck in Längsrichtung beansprucht werden, sondern nur einer Biegebelastung unterworfen sind, und/oder
d) **dass** die Versorgungsschläuche (21) durch die Drehachse (22) des Gelenks verlaufen, und/oder
e) **dass** die einzelnen Versorgungsschläuche (21) in dem Lackierroboter (6, 7) von dem drehbaren Roboterteil (13) bis zu dem distalen Roboterarm (15) jeweils in einer Schlauchebene verlaufen, so dass die Versorgungsschläuche (21) bei einem Verschwenken der Roboterarme (14, 15) nur in der Schlauchebene verbogen werden.

10. Lackiereinrichtung (1) nach einem der vorhergehenden Ansprüche, **dadurch gekennzeichnet, dass** die in oder an dem Roboterarm (14, 15) angeordnete Applikationstechnik folgende Geräte umfasst:
a) mindestens einen Farbwechsler zur Auswahl einer gewünschten Farbe, wobei der Farbwechsler eingangsseitig mit mehreren Farbzuleitungen und ausgangsseitig mit einem Zerstäuber verbunden ist, und/oder
b) mindestens eine Dosierpumpe oder ein anderes Dosierorgan, das den zu applizierenden Lack dosiert, und/oder
c) einen Motor zum Antrieb der Dosierpumpe bzw. des Dosierorgans, und/oder
d) einen Farbdruckregler zur Regelung des Applikationsdrucks, und/oder
e) einen Hochspannungsgenerator zur Erzeugung der für eine elektrostatische Lackierung erforderlichen Hochspannung.

11. Lackiereinrichtung (1) nach einem der Ansprüche 7 bis 10, **dadurch gekennzeichnet,**
a) **dass** der distale Roboterarm (15) über ein Ellbogengelenk (18) schwenkbar mit dem proximalen Roboterarm (14) verbunden ist, und/oder
b) **dass** das Ellbogengelenk (18) zwischen dem proximalen Roboterarm (14) und dem distalen Roboterarm (15) in mindestens einer Roboterstellung nach unten gerichtet ist, und/oder
c) **dass** der distale Roboterarm (15) in einer Roboterstellung im Wesentlichen horizontal verläuft und in horizontaler Richtung in einen Innenraum einer Kraftfahrzeugkarosserie (2) einführbar ist, um den Innenraum zu lackieren, und/oder
d) **dass** das Ellbogengelenk (18) zwischen dem proximalen Roboterarm (14) und dem distalen Roboterarm (15) in mindestens einer Roboterstellung nach oben gerichtet ist, und/oder
e) **dass** der Lackierroboter (6, 7) zur Innenlackierung von Kraftfahrzeugkarosserien (2) geeignet ist.

12. Lackiereinrichtung (1) nach einem der vorhergehenden Ansprüche, **gekennzeichnet durch** einen Förderer (3), der die zu lackierenden Bauteile (2) **durch** die Lackiereinrichtung (1) fördert, wobei die Roboterbasis (12) gegenüber dem Förderer (3) nach oben versetzt angeordnet ist, insbesondere in einer Höhe oberhalb der Oberseite der zu lackierenden Bauteile (2).

13. Lackiereinrichtung (1) nach einem der Ansprüche 2 bis 12, **dadurch gekennzeichnet,**
a) **dass** die Roboterbasis (12) ortsfest montiert ist, insbesondere direkt an dem die Tragsäule bildenden Steuerschrank (8, 9), oder
b) **dass** die Roboterbasis (12) mit dem Lackierroboter (6, 7) auf einer Verfahrschiene (27, 28, 29) verfahrbar ist, insbesondere in Förderrichtung der zu lackierenden Bauteile (2), wobei die Verfahrschiene (27, 28, 29) von dem als Tragsäule ausgebildeten Steuerschrank (8, 9) abgestützt wird.

14. Lackiereinrichtung (1) nach einem der vorhergehenden Ansprüche, **gekennzeichnet durch**
a) einen Handhabungsroboter (26) zum Öffnen und Schließen von Türen oder Hauben (31) der zu lackierenden Bauteile (2), und/oder
b) eine Verfahrschiene (27), die an der Tragsäule montiert ist und entlang derer der Handhabungsroboter (26) verfahrbar ist.

15. Lackiereinrichtung (1) nach Anspruch 145,
**dadurch gekennzeichnet,**
a) **dass** die Verfahrschiene (27) des Handhabungsroboters (26) ausschließlich von der Tragsäule getragen wird, und/oder
b) **dass** der Lackierroboter (6, 7) ortsfest an derselben Tragsäule (8, 9) montiert ist wie die Verfahrschiene (27) des Handhabungsroboters (26), und/oder
c) **dass** der Lackierroboter (6, 7) oberhalb des Handhabungsroboters (26) an der Tragsäule montiert ist, und/oder
d) **dass** die Verfahrschiene (27) des Handhabungsroboters (26) kürzer ist als die Lackierkabine (1), und/oder
e) **dass** die Verfahrschiene (27) des Handhabungsroboters (26) gegenüber dem Lackierroboter (6, 7) in Förderrichtung der Bauteile (2) versetzt angeordnet ist.

16. Lackiereinrichtung (1) nach einem der vorhergehenden Ansprüche, **dadurch gekennzeichnet,**
a) **dass** der Lackierroboter (6, 7) in einer Lackierkabine (1) angeordnet ist,
b) **dass** der als Tragsäule ausgebildete Steuerschrank (8, 9) außerhalb der Lackierkabine (1) angeordnet ist, und/oder
c) **dass** die Lackierkabine (1) Kabinenwände (4, 5) aufweist, die im Wesentlichen glattflächig sind, und/oder
d) **dass** die Lackierkabine (1) Kabinenwände (4, 5) aufweist, die mindestens teilweise durchsichtig sind oder mindestens ein Sichtfenster aufweisen.

17. Lackiereinrichtung (1) nach einem der vorhergehenden Ansprüche, **dadurch gekennzeichnet, dass** der Lackierroboter (6, 7) zusätzlich zu einem Zerstäuber (17) einen Handhabungsgriff (30) aufweist, um Türen oder Hauben (31) der zu lackierenden Bauteile (2) zu öffnen.

18. Lackiereinrichtung nach einem der vorhergehenden Ansprüche, **dadurch gekennzeichnet,**
a) **dass** die den Steuerschrank bildende Tragsäule (37) an einer Verfahrschiene (38, 39) verfahrbar ist, und/oder
b) **dass** die Verfahrschiene (38, 39) für die Tragsäule (37) im Wesentlichen parallel zur Förderrichtung der zu lackierenden Kraftfahrzeugkarosserien ausgerichtet ist, und/oder
c) **dass** die verfahrbare Tragsäule (37) im Wesentlichen vertikal ausgerichtet ist, und/oder
d) **dass** der Lackierroboter (32) an der Tragsäule (37) in vertikaler Richtung verfahrbar ist.

19. Lackiereinrichtung nach einem der vorhergehenden Ansprüche, **gekennzeichnet durch**
a) eine Verfahrschiene entlang der der Lackierroboter verfahrbar ist, und
b) einen im Wesentlichen vertikal ausgerichteten Träger zur Verbindung des Lackierroboters mit der Verfahrschiene, wobei der Träger an seiner Oberseite von der Verfahrschiene geführt wird und entlang der Verfahrschiene verfahrbar ist, während der Träger an seiner Unterseite die Roboterbasis des Lackierroboters trägt.

20. Lackiereinrichtung nach einem der vorhergehenden Ansprüche, **gekennzeichnet durch**
a) einen Förderer, der die zu lackierenden Bauteile in einer Förderrichtung **durch** die Lackiereinrichtung fördert, und
b) mindestens eine Verfahrschiene entlang welcher der Lackierroboter verfahrbar ist, wobei die Verfahrschiene quer zu der Förderrichtung ausgerichtet ist.

21. Lackiereinrichtung nach Anspruch 20,
**gekennzeichnet durch**
a) eine Lackierkabine mit einer seitlichen Kabinenwand, und/oder
b) eine bestimmte Kabinenbreite der Lackierkabine, wobei die Kabinenbreite seitlich neben der Verfahrschiene des Lackierroboters größer ist als in Förderrichtung vor und hinter der Verfahrschiene des Lackierroboters, und/oder
c) seitliche Ausbuchtungen in der Kabinenwand seitlich neben der quer verlaufenden Verfahrschiene, so dass der Lackierroboter auf der Verfahrschiene in die Ausbuchtung der Lackierkabine hinein gefahren werden kann.

22. Lackiereinrichtung nach einem der vorhergehenden Ansprüche, **dadurch gekennzeichnet, dass**
a) dass der Lackierroboter eine Roboterbasis aufweist, an der mindestens zwei Roboterarme beweglich angelenkt sind, und/oder
b) dass die Roboterarme jeweils einen Zerstäuber führen, oder
c) dass der eine Roboterarm einen Zerstäuber führt, während der andere Roboterarm ein Handhabungswerkzeug führt, insbesondere einen Greifer zum Öffnen oder Schließen einer Haube oder einer Tür einer Kraftfahrzeugkarosserie.

## Claims

1. A painting device (1) for painting components (2), in particular for painting motor vehicle bodies or parts thereof, comprising
a) a multi-axis painting robot (6, 7) which positions an atomizer,
b) application technology comprising components for frequently used coating agents and components for rarely used coating agents,
c) wherein the components of the application technology for the frequently used coating agents are mounted on or in a distal robot arm of the painting robot (6, 7),
**characterized in that**
d) the components of the application technology for the rarely used coating agents are mounted on or in a proximal robot arm of the painting robot (6, 7).

2. The painting device (1) according to claim 1,
**characterized by**
a) a robot controller (23, 24) for controlling the painting robot (6, 7), and
b) a control cabinet (8, 9) which contains the robot controller (23, 24), wherein the control cabinet (8, 9) form a support column which mechanically supports the painting robot (6, 7).

3. The painting device (1) according to claim 2,
**characterized in that**
a) the painting device (1) together with the painting robot (6, 7) and the control cabinet (8, 9) forms a preassembled module,
b) the control cabinet (8, 9) has an interface via which all the fluid and electrical supply lines necessary for operation of the painting robot (6, 7) can be connected,
c) the supply lines are guided in the preassembled module from the interface of the control cabinet to the painting robot (6, 7).

4. The painting device (1) according to one of the preceding claims, **characterized in that**
a) the painting robot (6, 7) is detachably connected to the control cabinet (8, 9) through an interface (19, 20),
b) the painting robot (6, 7) is mechanically attached to the support column through the interface (19, 20), and
c) the interface (19, 20) contains all the fluid and electrical supply lines between the control cabinet (8, 9) and the painting robot (6, 7) that are necessary for operation of the painting robot (6, 7).

5. The painting robot (6, 7) according to claim 3 or 4, **characterized in that** the interface comprises the following supply lines (21):
a) at least one pneumatic line for supplying compressed air to the painting robot (6, 7), and/or
b) at least one paint line for supplying the painting robot (6, 7) with the paint to be applied, and/or
c) a flushing agent line for supplying a flushing agent to the painting robot (6, 7), and/or
d) a return line for the return of flushing agent and/or paint from the painting robot (6, 7), and/or
e) electrical control lines for actuation of the robot by the robot controller (23, 24), and/or
f) at least one sensor line for the reporting of sensor variables from the painting robot (6, 7) to the robot controller (23, 24).

6. The painting device (1) according to one of the preceding claims, **characterized in that**
a) the painting robot (6, 7) comprises a robot base (12), a rotatable robot part (13), a pivotable proximal robot arm (14) and a pivotable distal robot arm (15),
b) the rotatable robot part (13) is rotatable relative to the robot base (12) about a substantially vertical axis of rotation,
c) the proximal robot arm (14) is pivotable relative to the rotatable robot part (13), in particular about a substantially horizontal pivot axis,
d) the distal robot arm (15) is pivotable relative to the proximal robot arm (14), in particular about a substantially horizontal pivot axis.

7. The painting device (1) according to one of claims 1 to 5, **characterized in that**
a) the painting robot (6, 7) comprises a robot base (12), a rotatable robot part (13), the pivotable proximal robot arm (14) and the pivotable distal robot arm (15),
b) the rotatable robot part (13) is rotatable relative to the robot base (12) about a substantially horizontal axis of rotation,
c) the proximal robot arm (14) is pivotable relative to the rotatable robot part (13), in particular about a pivot axis which runs at right angles to the axis of rotation of the rotatable robot part (13), in particular at right angles to the conveying direction of the components (2),
d) the distal robot arm (15) is pivotable relative to the proximal robot arm (14), in particular about a pivot axis which runs at right angles to the axis of rotation of the rotatable robot part (13), in particular at right angles to the conveying direction of the components (2).

8. The painting device (1) according to claim 6 or 7, **characterized in that**
a) the rotatable robot part (13) is arranged below the robot base (12), or
b) the rotatable robot part (13) is arranged to the side of the robot base (12), or
c) the rotatable robot part (13) is arranged above the robot base (12).

9. The painting device (1) according to one of claims 6 to 8, **characterized in that**
a) a plurality of flexible supply hoses (21) are provided for supplying the media necessary for operation of the painting robot (6, 7), in particular compressed air, paint and flushing agent,
b) a rotatable joint is arranged between the rotatable robot part (13) and the proximal robot arm (14) and/or between the proximal robot arm (14) and the distal robot arm (15),
c) the supply hoses (21) are guided through the joint on a neutral fiber so that the supply hoses (21) are not subjected to tensile or compressive stress in the longitudinal direction during a rotation of the joint, but rather are subjected only to a bending load, and/or
d) the supply hoses (21) run through the axis of rotation (22) of the joint, and/or
e) the individual supply hoses (21) in the painting robot (6, 7) run in each case in a hose plane from the rotatable robot part (13) to the distal robot arm (15) so that the supply hoses (21) are bent only in the hose plane during a pivoting of the robot arms (14, 15).

10. The painting device (1) according to any of the preceding claims, **characterized in that** the application technology arranged in or on the robot arm (14, 15) includes the following equipment:
a) at least one color changer for selecting a desired color, wherein the color changer is connected on the input side to a plurality of color feed lines and on the output side to an atomizer, and/or
b) at least one metering pump or another metering element which meters the paint to be applied, and/or
c) a motor for driving the metering pump or metering element, and/or
d) a paint pressure regulator for regulating the application pressure, and/or
e) a high voltage generator for generating the high voltage required for electrostatic painting.

11. The painting device (1) according to one of claims 7 to 10, **characterized in that**
a) the distal robot arm (15) is pivotably connected to the proximal robot arm (14) via an elbow joint (18), and/or
b) the elbow joint (18) between the proximal robot arm (14) and the distal robot arm (15) is directed downward in at least one robot position, and/or
c) the distal robot arm (15) in one robot position runs substantially horizontally and can be introduced in the horizontal direction into an interior of a motor vehicle body (2) in order to paint the interior, and/or
d) the elbow joint (18) between the proximal robot arm (14) and the distal robot arm (15) is directed upward in at least one robot position, and/or
e) the painting robot (6, 7) is suitable for painting the interior of motor vehicle bodies (2).

12. The painting device (1) according to one of the preceding claims, **characterized by** a conveyor (3) which conveys the components (2) to be painted through the painting device (1), wherein the robot base (12) is offset in the upward direction relative to the conveyor (3), in particular at a height above the upper side of the components (2) to be painted.

13. The painting device (1) according to one of claims 2 to 12, **characterized in that**
a) the robot base (12) is mounted in a stationary manner, in particular directly on the control cabinet (8, 9) forming the support column, or
b) the robot base (12) together with the painting robot (6, 7) can be displaced on a displacement rail (27, 28, 29), in particular in the conveying direction of the components (2) to be painted, wherein the displacement rail (27, 28, 29) is supported by the control cabinet (8, 9) configured as the support column.

14. The painting device (1) according to one of the preceding claims, **characterized by**
a) a handling robot (26) for opening and closing doors or hoods (31) of the components (2) to be painted, and/or
b) a displacement rail (27) which is mounted on the support column and along which the handling robot (26) can be displaced.

15. The painting device (1) according to claim 14, **characterized in that**
a) the displacement rail (27) for the handling robot (26) is borne exclusively by the support column, and/or
b) the painting robot (6, 7) is mounted in a stationary manner on the same support column (8, 9) as the displacement rail (27) for the handling robot (26), and/or
c) the painting robot (6, 7) is mounted above the handling robot (26) on the support column, and/or
d) the displacement rail (27) for the handling robot (26) is shorter than the painting booth (1), and/or
e) the displacement rail (27) for the handling robot (26) is arranged offset relative to the painting robot (6, 7) in the conveying direction of the components (2).

16. The painting device (1) according to one of the preceding claims, **characterized in that**
a) the painting robot (6, 7) is arranged in a painting booth (1),
b) the control cabinet (8, 9) configured as the support column is arranged outside the painting booth (1), and/or
c) the painting booth (1) has booth walls (4, 5) which are substantially smooth, and/or
d) the painting booth (1) has booth walls (4, 5) which are at least partially transparent or have at least one viewing window.

17. The painting device (1) according to one of the preceding claims, **characterized in that** the painting robot (6, 7) has, in addition to an atomizer (17), a handling grip (30) for opening doors or hoods (31) of the components (2) to be painted.

18. The painting device according to one of the preceding claims, **characterized in that**
a) the support column (37) forming the control cabinet is displaceable on a displacement rail (38, 39), and/or
b) the displacement rail (38, 39) for the support column (37) is oriented substantially parallel to the conveying direction of the motor vehicle bodies to be painted, and/or
c) the displaceable support column (37) is oriented substantially vertically, and/or
d) the painting robot (32) is displaceable on the support column (37) in the vertical direction.

19. The painting device according to one of the preceding claims, **characterized by**
a) a displacement rail along which the painting robot can be displaced, and
b) a substantially vertically oriented carrier for connecting the painting robot to the displacement rail, wherein the carrier is guided on its upper side by the displacement rail and can be displaced along the displacement rail, while the carrier carries on its underside the robot base of the painting robot.

20. The painting device according to one of the preceding claims, **characterized by**
a) a conveyor which conveys the components to be painted in a conveying direction through the painting device, and
b) at least one displacement rail along which the painting robot can be displaced, wherein the displacement rail is oriented transversely to the conveying direction.

21. The painting device according to claim 20,
**characterized by**
a) a painting booth having a lateral booth wall, and/or
b) a certain booth width of the painting booth, wherein the booth width is greater to the side of the displacement rail for the painting robot than in the conveying direction in front of and behind the displacement rail for the painting robot, and/or
c) lateral indentations in the booth wall to the side of the transversely running displacement rail, so that the painting robot on the displacement rail can be moved into the indentation of the painting booth.

22. The painting device according to one of the preceding claims, **characterized in that**
a) the painting robot comprises a robot base on which at least two robot arms are movably articulated, and/or
b) the robot arms each guide an atomizer, or
c) one robot arm guides an atomizer while the other robot arm guides a handling tool, in particular a gripper for opening or closing a hood or a door of a motor vehicle body.

## Revendications

1. Installation de peinture (1) pour la peinture de pièces (2), en particulier pour la peinture de carrosseries automobiles ou des pièces de celles-ci, comportant
a) un robot de peinture (6, 7) multiaxe, qui positionne un pulvérisateur,
b) une technique d'application avec des pièces pour des produits de revêtement souvent utilisés et des pièces pour des produits de revêtement rarement utilisés,
c) dans laquelle installation les pièces de la technique d'application pour des produits souvent utilisés sont montées sur ou dans un bras distal du robot de peinture (6, 7),
**caractérisé en ce que**
d) les pièces de la technique d'application pour des produits rarement utilisés sont montées sur ou dans un bras proximal du robot de peinture (6, 7).

2. Installation de peinture (1) selon la revendication 1, **caractérisée par**
a) une commande de robot (23, 24) destinée à commander le robot de peinture (6, 7), et
b) une armoire de commande (8, 9) qui contient la commande de robot (23, 24), dans laquelle installation l'armoire de commande (8, 9) forme une colonne de support qui supporte mécaniquement le robot de peinture (6, 7).

3. Installation de peinture (1) selon la revendication 2, **caractérisée**
a) **en ce que** l'installation de peinture (1) forme avec le robot de peinture (6, 7) et l'armoire de commande (8, 9) un module pré-assemblé,
b) **en ce que** l'armoire de commande (8, 9) comporte une interface via laquelle peuvent être raccordées toutes les conduites d'alimentation fluidiques et électriques nécessaires pour le fonctionnement du robot de peinture (6, 7),
c) **en ce que** les conduites d'alimentation dans le module pré-assemblé sont guidées depuis l'interface de l'armoire de commande vers le robot de peinture (6, 7).

4. Installation de peinture (1) selon l'une quelconque des revendications précédentes, **caractérisée**
a) **en ce que** le robot de peinture (6, 7) est relié via une interface (19, 20) de manière amovible à l'armoire de commande (8, 9),
b) **en ce que** le robot de peinture (6, 7) est fixé mécaniquement via l'interface (19, 20) à la colonne de support, et
c) **en ce que** ladite interface (19, 20) contient toutes les conduites d'alimentation fluidiques et électriques entre l'armoire de commande (8, 9) et le robot de peinture (6, 7), lesquelles sont nécessaires au fonctionnement du robot de peinture (6, 7).

5. Robot de peinture (6, 7) selon la revendication 3 ou 4, **caractérisé en ce que** l'interface comporte les conduites d'alimentation (21) suivantes :
a) au moins une conduite pneumatique pour fournir l'air comprimé au robot de peinture (6, 7), et/ou
b) au moins une conduite de peinture pour fournir au robot de peinture (6, 7) la peinture à appliquer, et/ou
c) une conduite de produit de nettoyage pour acheminer un produit de nettoyage vers le robot de peinture (6, 7), et/ou
d) une conduite de retour pour renvoyer le produit de nettoyage et/ou la peinture à partir du robot de peinture (6, 7), et/ou
e) des lignes de commande électriques pour commander le robot via la commande de robot (23, 24), et/ou
f) au moins une ligne de détection pour transmettre des grandeurs de détection à partir du robot de peinture (6, 7) vers la commande de robot (23, 24).

6. Installation de peinture (1) selon l'une quelconque des revendications précédentes, **caractérisée**
a) **en ce que** le robot de peinture (6, 7) comporte une base (12), une partie rotative (13), le bras proximal (14) pivotant et le bras distal (15) pivotant,
b) **en ce que** la partie rotative (13) est apte à tourner par rapport à la base (12) autour d'un axe de rotation sensiblement vertical,
c) **en ce que** le bras proximal (14) est apte à pivoter par rapport à la partie rotative (13), en particulier autour d'un axe de pivotement sensiblement horizontal,
d) **en ce que** le bras distal (15) est apte à pivoter par rapport au bras proximal (14), en particulier autour d'un axe de pivotement sensiblement horizontal.

7. Installation de peinture (1) selon l'une quelconque des revendications 1 à 5, **caractérisée**
a) **en ce que** le robot de peinture (6, 7) comporte une base (12), une partie rotative (13), le bras proximal (14) pivotant et le bras distal (15) pivotant,
b) **en ce que** la partie rotative (13) est apte à tourner par rapport à la base (12) autour d'un axe de rotation sensiblement horizontal,
c) **en ce que** le bras proximal (14) est apte à pivoter par rapport à la partie rotative (13), en particulier autour d'un axe de pivotement perpendiculaire à l'axe de rotation de la partie rotative (13), en particulier perpendiculaire à la direction de convoyage des pièces (2),
d) **en ce que** le bras distal (15) est apte à pivoter par rapport au bras proximal (14), en particulier autour d'un axe de pivotement perpendiculaire à l'axe de rotation de la partie rotative (13), en particulier perpendiculaire à la direction de convoyage des pièces (2) .

8. Installation de peinture (1) selon la revendication 6 ou 7, **caractérisée**
a) **en ce que** la partie rotative (13) est disposée en dessous de la base (12), ou
b) **en ce que** la partie rotative (13) est disposée latéralement à côté de la base (12), ou
c) **en ce que** la partie rotative (13) est disposée au-dessus de la base (12).

9. Installation de peinture (1) selon l'une quelconque des revendications 6 à 8, **caractérisée**
a) **en ce que** pour acheminer les fluides, en particulier l'air comprimé, la peinture et le produit de nettoyage, nécessaires au fonctionnement du robot de peinture (6, 7), il est prévu plusieurs tuyaux flexibles d'alimentation (21),
b) **en ce qu'**une articulation rotative est disposée entre la partie rotative (13) et le bras proximal (14) et/ou entre le bras proximal (14) et le bras distal (15),
c) **en ce que** les tuyaux flexibles d'alimentation (21) sont guidés sur une fibre neutre à travers l'articulation, de telle sorte que les tuyaux flexibles d'alimentation (21) ne sont sollicités ni en traction ni en pression dans la direction longitudinale pendant une rotation de l'articulation, mais sont seulement soumis à une sollicitation en flexion, et/ou
d) **en ce que** les tuyaux flexibles d'alimentation (21) passent à travers l'axe de rotation (22) de l'articulation, et/ou
e) en que les différents tuyaux flexibles d'alimentation (21) s'étendent dans le robot de peinture (6, 7) à partir de la partie rotative (13) jusqu'au bras distal (15), respectivement dans un plan de tuyaux, de telle sorte que pendant un pivotement des bras (14, 15), les tuyaux flexibles d'alimentation (21) sont pliés uniquement dans le plan de tuyaux.

10. Installation de peinture (1) selon l'une quelconque des revendications précédentes, **caractérisée en ce que** la technique d'application, disposée dans ou sur le bras (14, 15) du robot, comporte les dispositifs suivants :
a) au moins un changeur de peinture pour choisir la peinture souhaitée, ledit changeur de peinture étant relié du côté entrée à plusieurs conduites de peinture et du côté sortie à un pulvérisateur, et/ou
b) au moins une pompe de dosage ou un autre organe de dosage qui dose la peinture à appliquer, et/ou
c) un moteur destiné à actionner la pompe de dosage ou l'organe de dosage, et/ou
d) un régulateur de pression de la peinture pour régler la pression d'application, et/ou
e) un générateur haute tension pour générer la haute tension nécessaire pour un processus de peinture électrostatique.

11. Installation de peinture (1) selon l'une quelconque des revendications 7 à 10, **caractérisée**
a) **en ce que** le bras distal (15) est relié au bras proximal (14) de manière à pouvoir pivoter par l'intermédiaire d'un coude articulé (18), et/ou
b) **en ce que** le coude articulé (18) entre le bras proximal (14) et le bras distal (15) est orienté vers le bas dans au moins une position du robot, et/ou
c) **en ce que** le bras distal (15) s'étend sensiblement horizontalement dans une position du robot et peut être introduit dans la direction horizontale dans un espace intérieur d'une carrosserie automobile (2), afin de peindre l'espace intérieur, et/ou
d) **en ce que** le coude articulé (18) entre le bras proximal (14) et le bras distal (15) est orienté vers le haut dans au moins une position du robot, et/ou
e) **en ce que** le robot de peinture (6, 7) est apte à peindre l'intérieur des carrosseries automobiles (2).

12. Installation de peinture (1) selon l'une quelconque des revendications précédentes, **caractérisée par** un convoyeur (3) qui transporte les pièces (2) à peindre à travers l'installation de peinture (1), la base (12) du robot étant décalée vers le haut par rapport au convoyeur (3), en particulier à une hauteur au-dessus de la face supérieure des pièces (2) à peindre.

13. Installation de peinture (1) selon l'une quelconque des revendications 2 à 12, **caractérisée**
a) **en ce que** la base (12) du robot est montée fixe, en particulier directement sur l'armoire de commande (8, 9) formant la colonne de support, ou
b) **en ce que** la base (12) du robot peut être déplacée avec le robot de peinture (6, 7) sur un rail de déplacement (27, 28, 29), en particulier dans la direction de convoyage des pièces (2) à peindre, ledit rail de déplacement (27, 28, 29) étant supporté par l'armoire de commande (8, 9) réalisée sous forme de colonne de support.

14. Installation de peinture (1) selon l'une quelconque des revendications précédentes, **caractérisée par**
a) un robot de manoeuvre (26) destiné à ouvrir et fermer les portes ou capots (31) des pièces (2) à peindre, et/ou
b) un rail de déplacement (27) qui est monté sur la colonne de support et le long duquel peut être déplacé le robot de manoeuvre (26).

15. Installation de peinture (1) selon la revendication 14, **caractérisée**
a) **en ce que** le rail de déplacement (27) du robot de manoeuvre (26) est supporté exclusivement par la colonne de support, et/ou
b) **en ce que** le robot de peinture (6, 7) est monté fixe sur la même colonne de support (8, 9) que le rail de déplacement (27) du robot de manoeuvre (26), et/bu
c) **en ce que** le robot de peinture (6, 7) est monté sur la colonne de support au-dessus du robot de manoeuvre (26), et/ou
d) **en ce que** le rail de déplacement (27) du robot de manoeuvre (26) est plus court que la cabine de peinture (1), et/ou
e) **en ce que** le rail de déplacement (27) du robot de manoeuvre (26) est décalé par rapport au robot de peinture (6, 7) dans la direction de convoyage des pièces (2).

16. Installation de peinture (1) selon l'une quelconque des revendications précédentes, **caractérisée**
a) **en ce que** le robot de peinture (6, 7) est placé dans une cabine de peinture (1),
b) **en ce que** l'armoire de commande (8, 9) réalisée sous forme de colonne de support est placée à l'extérieur de la cabine de peinture (1), et/ou
c) **en ce que** la cabine de peinture (1) comporte des parois (4, 5) qui ont des surfaces sensiblement lisses, et/ou
d) **en ce que** la cabine de peinture (1) comporte des parois (4, 5) qui sont transparentes au moins en partie ou comportent au moins une fenêtre.

17. Installation de peinture (1) selon l'une quelconque des revendications précédentes, **caractérisée en ce que** le robot de peinture (6, 7) comporte, en plus du pulvérisateur (17), une poignée de manoeuvre (30) pour ouvrir des portes ou capots (31) des pièces (2) à peindre.

18. Installation de peinture selon l'une quelconque des revendications précédentes, **caractérisée**
a) **en ce que** la colonne de support (37) formant l'armoire de commande, peut être déplacée sur un rail de déplacement (38, 39), et/ou
b) **en ce que** le rail de déplacement (38, 39) pour la colonne de support (37) est orienté sensiblement parallèlement à la direction de convoyage des carrosseries automobiles à peindre, et/ou
c) **en ce que** la colonne de support (37) déplaçable est orientée sensiblement verticalement, et/ou
d) **en ce que** le robot de peinture (6, 7) peut être déplacé dans la direction verticale sur la colonne de support (37).

19. Installation de peinture selon l'une quelconque des revendications précédentes, **caractérisée par**
a) un rail de déplacement le long duquel le robot de peinture peut être déplacé, et
b) un support orienté sensiblement verticalement pour relier le robot de peinture au rail de déplacement, ledit support étant guidé au niveau de sa face supérieure par le rail de déplacement et pouvant être déplacé le long dudit rail de déplacement, alors que le support porte sur sa face inférieure la base du robot de peinture.

20. Installation de peinture selon l'une quelconque des revendications précédentes, **caractérisée par**
a) un convoyeur qui transporte les pièces à peindre dans une direction de convoyage à travers l'installation de peinture, et
b) au moins un rail de déplacement le long duquel le robot de peinture peut être déplacé, ledit rail de déplacement étant orienté transversalement à la direction de convoyage.

21. Installation de peinture selon la revendication 20, **caractérisée par**
a) une cabine de peinture avec une paroi latérale, et/ou
b) une largeur déterminée de la cabine de peinture, ladite largeur, latéralement à côté du rail de déplacement du robot de peinture, étant supérieure à celle dans la direction de convoyage devant et derrière le rail de déplacement du robot de peinture, et/ou
c) des courbures latérales dans la paroi de la cabine à côté du rail de déplacement s'étendant transversalement, de telle sorte que le robot de peinture peut être déplacé sur le rail de déplacement vers l'intérieur de la courbure de la cabine de peinture.

22. Installation de peinture selon l'une quelconque des revendications précédentes, **caractérisée**
a) **en ce que** le robot de peinture comporte une base sur laquelle sont articulés de manière mobile au moins deux bras du robot, et/ou
b) **en ce que** les bras du robot guident chacun un pulvérisateur, ou
c) **en ce que** l'un des bras du robot guide un pulvérisateur, tandis que l'autre bras guide un outil de manoeuvre, en particulier un grappin pour ouvrir ou fermer un capot ou une porte d'une carrosserie automobile.
